# EUROPEAN PATENT SPECIFICATION

(11) **EP 0 660 487 B1**
(45) Date of publication and mention of the grant of the patent: **02.03.2005**
(21) Application number: 94120293.9
(22) Date of filing: 21.12.1994
(51) Int. Cl.: H02J 3/46

(54) **Power supply system**
Stromversorgung
Système d'alimentation

(30) Priority: 27.12.1993 JP 33102293
(43) Date of publication of application: 28.06.1995
(73) Proprietor: Hitachi, Ltd., Chiyoda-ku, Tokyo 101 (JP)
(72) Inventor: Takahashi, Tadashi, Hitachi-shi, Ibaraki 319-12 (JP); Onda, Kenichi, Hitachi-shi, Ibaraki 316 (JP); Kanouda, Akihiko, Hitachinaka-shi, Ibaraki 312 (JP); Sato, Masayoshi, Hitachi-shi, Ibaraki 316 (JP); Horie, Hideaki, Hitachi-shi, Ibaraki 316 (JP); Hayashi, Katsunori, Odawara-shi, Kanagawa 256 (JP)
(74) Representative: Altenburg, Udo, Dipl.-Phys.

(56) References cited:
- EP-A- 0 156 724
- EP-A- 0 498 646
- EP-A- 0 553 824
- DE-A- 3 003 907
- DE-U- 9 408 978
- US-A- 4 384 321
- US-A- 4 788 449
- US-A- 5 003 453
- US-A- 5 157 269
- US-A- 5 207 613

## Description

### Background of the Invention:

The present invention relates to a power supply system for supplying the electric power to a load through plural converters which are formed with a parallel operation arrangement.

The present invention relates to a power supply system for supplying the electric power to a load or plural loads through plural AC/DC parallel operation arrangement converters for converting the alternative current to the direct current having a predetermined voltage or plural DC/DC parallel operation arrangement converters for converting the direct current to the other direct current having a predetermined voltage.

A construction of a conventional power supply system having parallel operation arrangement converters is disclosed in, for examples, Japanese patent laid-open publication No. 270743/1989, Japanese patent laid-open publication No. 27415/1976, and/or Japanese patent laid-open publication No. 140632/1988.

Further, an improvement construction for a power factor of an alternative current side being an input of a respective converter in a conventional power supply system is disclosed in, for example, Japanese patent laid-open publication No. 31371/1987.

US-A-5,157,269 discloses a load current sharing circuit that allows multiple independent power modules to be connected in a parallel configuration such that each module delivers only its proportionate share of the load current, wherein one module is the master and all the other modules act as slaves, the slaves' load current asymptotically approaching the load current of the master.

In the above-stated prior power supply system techniques, the parallel operation arrangement of the DC/DC converters itself and the parallel operation arrangement of the DC/DC converters having a redundancy are disclosed. However, there is no consideration about countermeasures for a case of a failure of some DC/DC converter among the plural DC/DC converters and further there is no examination of an aspect in the reliability of the power supply system.

Besides, a technical report of IEICE (the Institute of Electronics, Information and Communication Engineers) PE 92-47, p.p. 23-29 (1992/11) "Control Scheme for Parallel Operation Control of DC/DC Converters" describes that both an average current control method and an overflow method in the parallel operation arrangement DC/DC converters have been performed commonly.

In the above stated technical report, two kinds of the current balance (a current partial charge) controls of the parallel operation arrangement converters are disclosed. One of the current balance control is the average current control method, in this method the current value of each converter is detected and the current value of the respective converter is matched with an average current value of these detected current values.

Besides, another of the current balance control is the overflow method, in this method each of the plural converters is connected merely in parallel operation arrangement.

However, in the above stated former average current control method, when some converter gets out of order (the failure generation in some converter), since an output current value of the some converter becomes zero, an average current value of all converter becomes low. However, since the current value of each converter becomes low, it is impossible to make to flow the necessary current required by a load to the converters. Essentially, it is necessary to increase the current to the converters.

So as to solve the above problems in the average current control method, it is desirable that by detecting the failure (fault) converter such a fault converter is cut off from the parallel operation arrangement of the converters through a switching means etc., and further it is necessary to distribute the current of the remaining converters so as to match with the load.

Besides, in the above stated latter overflow method, each converter is merely connected in the parallel operation arrangement, the current balance is limited according to a current limiter of each converter, thereby the current value is not balanced and accordingly the voltage fluctuation becomes large.

Further, as stated in the above, the improvement circuit of the power factor at the alternative input side which is the input of the respective converter in the conventional power supply system is proposed in Japanese patent laid-open publication No. 31371/1987. However, there is no construction in response to the plural alternative power supplies in this prior technique.

### Summary of the Invention:

A main object of the present invention is to provide a power supply system wherein in a power supply system comprising plural converters being connected in parallel a stable output in the power supply system can be obtained without an affect by a fault converter and further a superior redundancy and a high reliability in the power supply system can be attained.

A second object of the present invention is to provide a power supply system wherein as a power supply system for a magnetic disk apparatus etc. a superior redundancy and a high reliability in the power supply system can be attained.

A third object of the present invention is to provide a power supply system wherein a power factor improvement circuit in the above stated power supply system is simplified and a compact construction in the power supply system can be attained.

The above stated objects are attained by a power supply system according to the independent claim. Further preferred embodiments are subject of the dependent claims.

### Brief Description of the Drawings:

Fig. 1 is a constructive view showing one embodiment of a power supply system according to the present invention;
Fig. 2 is a detailed view showing a control circuit in the power supply system shown in Fig. 1;
Fig. 3 is a diagram comparing a feature of the present invention and that of prior techniques;
Fig. 4 is a concrete constructive view showing a converter shown in Fig. 1;
Fig. 5 is another concrete constructive view showing a converter shown in Fig. 1;
Fig. 6 is a further concrete constructive view showing a converter shown in Fig. 1;
Fig. 7 is a concrete constructive circuit view showing a current control shown in Fig. 5;
Fig. 8 is anther concrete constructive circuit view showing a current control shown in Fig. 6;
Fig. 9 is a constructive view showing another embodiment of a power supply system according to the present invention;
Fig. 10 is a relationship view showing one example of a parallel number and a capacity ratio of a converter;
Fig. 11 is a relationship view showing another example of a parallel number and a capacity ratio of a converter;
Fig. 12 is a constructive view showing another embodiment of the present invention in which a power supply system is installed into a magnetic disk apparatus;
Fig. 13 is constructive view showing one example in which a control circuit for a magnetic disk apparatus in addition to a magnetic disk and converters shown in Fig. 7 is arranged;
Fig. 14 is a constructive view showing a connection example by a common bus comprising plural converters and plural magnetic disk apparatuses according to the present invention;
Fig. 15 is a constructive view showing a further embodiment of a power supply system according to the present invention;
Fig. 16 is a constructive view showing a further embodiment of a power supply system including a power factor improvement circuit according to the present invention;
Fig. 17 is a constructive view showing a further embodiment of a power supply system including a power factor improvement circuit according to the present invention;
Fig. 18 is a constructive view showing a further embodiment of a power supply system including a power factor improvement circuit according to the present invention;
Fig. 19 is a constructive view showing an example in which a power supply system according to the present invention is adapted to an automobile;
Fig. 20 is a constructive view showing another example in which a power supply system according to the present invention is adapted to a computer; and
Fig. 21 is a constructive view showing a further example in which a power supply system according to the present invention is adapted to a computer.

### Description of the Invention:

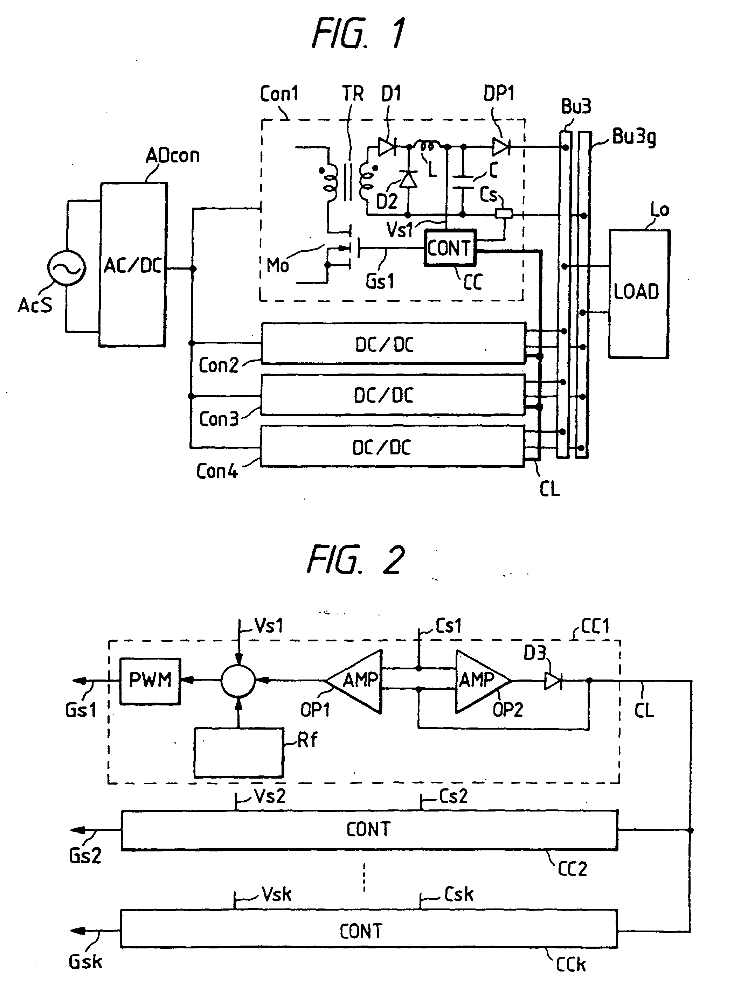

Fig. 1 is a block diagram showing one embodiment of a power supply system according to the present invention. ADcon indicates an AC/DC converter (a rectifying circuit) for converting the alternative current from an alternative power supply AcS to the direct current.

Each of elements con1-con4 is a DC/DC converter for outputting the stable direct current electric power by receiving the direct current from the AC/DC converter ADcon and four converters are provided in parallel. The direct current outputs from the DC/DC converters con1-con4 are given to a load Lo through a plus side and a minus side common buses Bu3 and Bu3g. Each of the DC/DC converters con1-con4 has respectively the same rate output current capacity.

Each of the DC/DC converters con1-con4 is constituted of a forward type converters. A main circuit of this converter comprises a semiconductor switching element Mo, which is connected to a primary side of a transformer TR connected in series to a direct current output side of the AC/DC converter ADcon, a smoothing circuit comprising of a rectifying circuit having diodes D1 and D2 connected to a secondary side of the transformer TR and a coil L and a condenser C, and a diode DP1 for preventing the reverse current.

A control circuit (CONT) CC1 controls the switching element Mo through an output signal Gs1 according to the detection of an output voltage Vs1 so as to make stably the detected output voltage Vs1 at a predetermined value.

Further, in the above control circuit CC1, a signal in which the output current is detected by a current detection means Cs and a control line CL are inputted for a control so as to follow the current of each converter according to a maximum current value among converters which are connected in parallel arrangement.

Next, the control circuit CC1 will be explained in detail referring to Fig. 2. Fig. 2 shows a concrete construction of the control circuit CC1 shown in Fig. 1. The detection value Cs1 of the output current of the converter is inputted to one of operational amplifiers OP1 and OP2, and at another input side of the operational amplifiers OP1 and OP2 the control line CL is connected to.

An output of the operational amplifier OP1 is connected to the control line CL through a diode D3. The output of the operational amplifier OP1 is compared with a standard voltage Rf and the converter output voltage Vs1 and a difference between them is inputted to a PWM circuit. The output signal Gs1 outputted from the PWM circuit operates the semiconductor switching element Mo shown in Fig. 1.

Since each control circuit CC1-CCk of the DC/DC converter in the parallel operation arrangement is connected as shown in figure, in the control line CL the largest current value among the plural converters appears.

Accordingly, each converter is controlled to output the largest current value and at the same time since each converter suffers respectively to receive a voltage control the current value of the converter in which the largest current value has flown becomes low. As a result, the current value of each converter is settled to flow with a balancing state, thereby the current balance in the parallel operation arrangement of the converters can be improved.

Further, in a system in which the redundancy is given by connecting commonly the plural loads and the plural converters through a common bus, in a case in which some converter gets out of order it is necessary to keeping on to carry out just as it is the operation according to the remaining converters.

Even in the above-stated case, according to the present invention, the fault converter is left just as it is the current value for carrying out the current control does not lower by the following of the maximum current value, and then the remaining converters can be partially charged to the load according to the control which follows the current value.

For example, in the construction shown in Fig. 1, four DC/DC converters having a rate output current capacity of 5A are operated in parallel and they supply the current value of 15A (the partial charge current value of one converter is of 3.75A) to the load.

Herein, on the assumption that one converter got out of order. In a case of no current control, the circuit itself constituting each converter has a comparative scattering in the electric characteristic, so that the actual output voltage value is not always the same. According to this fact, in a case in which some converter gets out of order, the converter having the maximum output voltage value takes transitionally the partial charge of the current value of 7.5A.

However, according to the present invention, on other converters the current value corresponding to the above-stated maximum current value appears on the control line CL. And on each converter, since the output voltage is controlled to increase in response to the current difference part in current value of 3.75A (= 7.5A - 3.75A), thereby the partial charge current value of one converter is controlled to have the current value of 5A.

In the above stated embodiment of the present invention, four number DC/DC converters con1-con4 are employed in the power supply system. For example, each of the four number DC/DC converters con1-con4 has the same rate output current capacity of 5A. As a result, the output current capacity of the four number DC/DC converters con1-con4 has 20A in all. Besides, the output current capacity of the load is 15A.

Therefore, in the case of the embodiment, the power supply system is constituted that one number converter having the rate output current capacity of 5A is added to increase in the power supply system. Namely, in the power supply system of this embodiment, one number converter is increased in the system.

Further, as another embodiment of the present invention, for example, five number converters can be employed in the power supply system. For example, each of the five number DC/DC converters has the same rate output current capacity of 5A. As a result, the output current capacity of the five number DC/DC converters has 25A in all. Besides, the output current capacity of the load is 15A.

In addition to the above power supply system construction, in the case of the above another embodiment, the power supply system is constituted that two number converter having the rate output current capacity of 5A are added to increase in the power supply system. Namely, in the power supply system of this another embodiment, two number converter are increased in the system, and each of DC/DC converters has the same rate output current capacity of 5A, respectively.

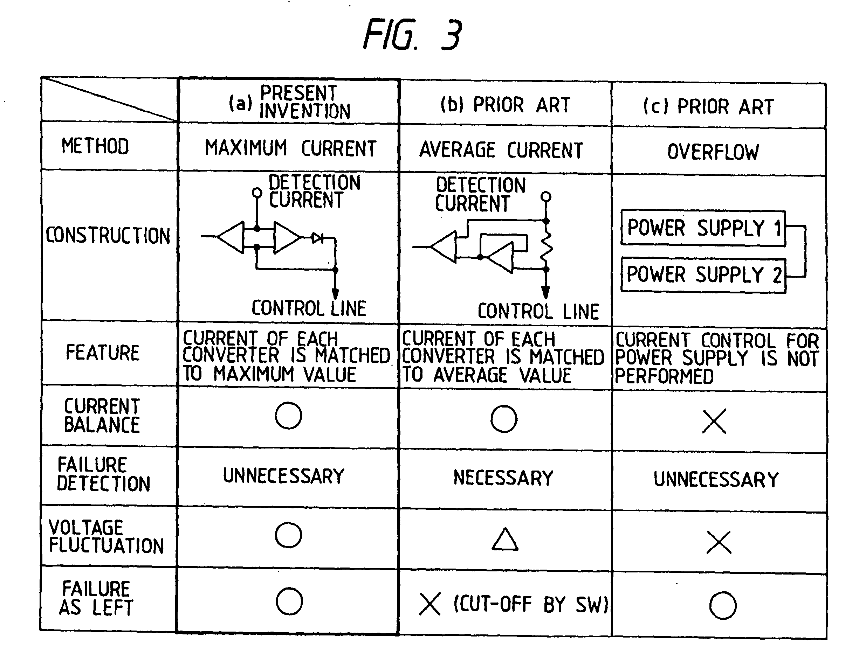

Next, so as to make more clearly the differences between the features according to the present invention and the features according to the conventional techniques will be explained referring to Fig. 3.

In the most simple conventional technique shown in an item (c) in Fig. 3, the plural power supplies are operated merely in parallel and a special control is not carried out, thereby this technique is called as "the overflow method".

In this overflow method, since the partial charge current becomes to have the current in response to an impedance of each converter, the current balance is not good and the large voltage fluctuation becomes large. However, on the other hand, when there is enough power supply capacity, even the converter gets out of order the power supply system can be left as it is.

Further, in the average current method according to the conventional technique shown in an item (b) in Fig. 3, the current value of each converter is controlled to match with the average current of all converters as the standard value.

However, in this average current method, in a case in which some converter under the parallel operation arrangement gets out of order, since the current value of the fault converter becomes zero, the standard value as the average current value becomes low. When each converter is controlled by matching with this current value, the composed current value becomes lower and the power supply system can not respond the required load current.

Accordingly, in this average current method, when some converter gets out of order, even the remaining converters have enough capacity, it can not carry out the normal operation. As a method for solving, the fault converter is detected by a failure detection circuit etc., and then it is necessary to cut off the fault converter by a switching means etc..

According to the present invention, as explained in Fig. 1 and Fig. 2, since the maximum current value of each converter is the standard value of the current control, even in the case in which some converter gets out of order, the standard value of the current control does not become low, the remaining converters can be partially charged to the load.

Further, in the case in which the converter gets out of order, the special circuit is not needed, even when the fault converter is left, since the remaining converters have enough capacity, the superior redundancy able to continue the normal operation in the power supply system can be obtained.

Further, in the embodiment shown in Fig. 1, to the AC/DC converter for converting the alternative current from the alternative power supply AcS, one AC/DC converter ADcon supplies the direct current to the plural DC/DC converters. However, the AC/DC converter may be provided respectively at a front stage of each DC/DC converter.

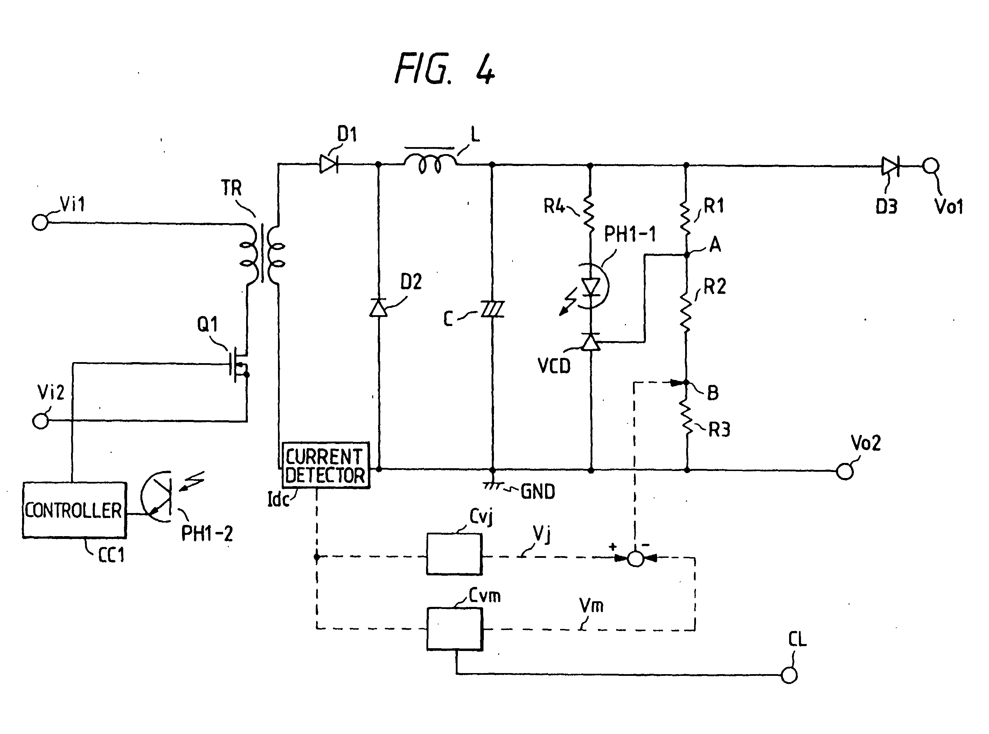

Fig. 4 shows a concrete construction of the converters con1-con4 shown in Fig. 1 of one embodiment according to the present invention. In the construction of the embodiment shown in Fig. 1, the control for the converter is carried out by the detection of the largeness of the smoothed direct current and is carried out to control by the detected direct current.

However, so as to detect such a smoothed direct current, since it is necessary to provide a detection means using a Hall element, there is a problem from an aspect of the cost. For that the above stated reasons, a construction using a low cost current detection means such a current transformer will be explained. The current detection means is installed between the secondary side of the transformer and the smoothing circuit and detects the pulsation in the current.

This example is a forward type DC/DC converter. The primary side of the transformer TR is connected to direct voltage terminals Vi1 and Vi2 through a switching element Q1. Further, a gate side of the switching element Q1 is connected to a secondary side of a photo-coupler PH1-2 through the PWM control circuit CC1.

On the other hand, a secondary side of the transformer TR is connected to the diode D1, the inductance L and the condenser C. Further, a diode D2 is connected in series to the condenser C and the inductance L. By the above-stated construction, by "on" and "off" operation of the switching element Q1, the alternative current voltage is obtained at the secondary side of the transformer TR.

The obtained alternative current voltage is rectified and smoothed through the diodes D1 and D2, the inductance L and the condenser C, and then the direct current voltage is obtained at the both ends of the condenser C. So as to control this direct current voltage at a constant voltage, a following voltage control circuit is constituted.

The voltage control circuit is connected in parallel to the condenser C with a series circuit comprising a resistor R4, the photo-coupler PH1-1, an anode side and a cathode side of a three terminal regulator VCD and further is connected to a series circuit comprising resistors R1, R2 and R3. A connecting point A of the resistors R1 and R2 is connected to a control terminal of the three terminal regulator VCD.

Further, when the plural converters are operated in parallel and in a case in which some converter gets out of order, a diode D3 is provided so as to prevent the reverse flow of the current.

As the above-stated construction, for example, the terminal voltage of the condenser C becomes low, then the voltage of the connecting point A between the resistors R1 and R2 also becomes low. Further, since the control terminal voltage of the three terminal regulator VCD becomes low, the current between the anode side and the cathode side of the three terminal regulator VCD lowers and thereby the current of the photo-couplers PH1-1 and PH1-2 becomes low.

For that the above stated reasons, the "on" and "off" duty of the output of the PWM control circuit CC1 increases and the secondary voltage of the transformer TR works to increase, so that the lowering of the terminal voltage of the condenser C is restrained.

When the terminal voltage of the condenser C will arise, by the reversal operation against the above-stated operation, the "on" and "off" duty of the output of the PWM control circuit CC1 is made to decrease. Thereby preventing the rise in the terminal voltage of the condenser C the terminal voltage is controlled to be at a constant voltage.

In the present invention, a current control circuit is added to the above-stated voltage control circuit by means of a following method. The current control circuit gives the output of a current detection means Idc for detecting the alternative current of the secondary side of the transformer TR to a respective current detection circuit Cvj and a maximum current detection circuit Cvm.

The maximum current detection circuit Cvm has the control line CL and is connected to the other converters under the parallel operation arrangement. The maximum current detection circuit Cvm operates to output a larger value from within the value obtained by the control line CL and the value of the current detection means Idc.

Next, the output voltage Vj of the respective current detection circuit Cvj is compared with the output voltage Vm of the current detection means Idc and they are struck the balance between them, and an obtained voltage result is added to a connecting point B between the resistors R2 and R3 of the voltage control circuit.

With the above stated construction, for example, when the current of the above-stated converter is smaller than those of the other converters, the output voltage Vm of the maximum current detection circuit Cvm becomes larger than the output voltage Vj of the respective current detection circuit Cvj, as a result the voltage of the connecting point B between the resistors R2 and R3 of the voltage control circuit becomes low.

For that above stated reasons, the voltage of the connecting point A between the resistors R1 and R2 of the voltage control circuit is judged to become low, the voltage of the condenser C rises and the current value of the above-stated converter rises and approaches to the current value of the other converters, thereby the current value can be balanced.

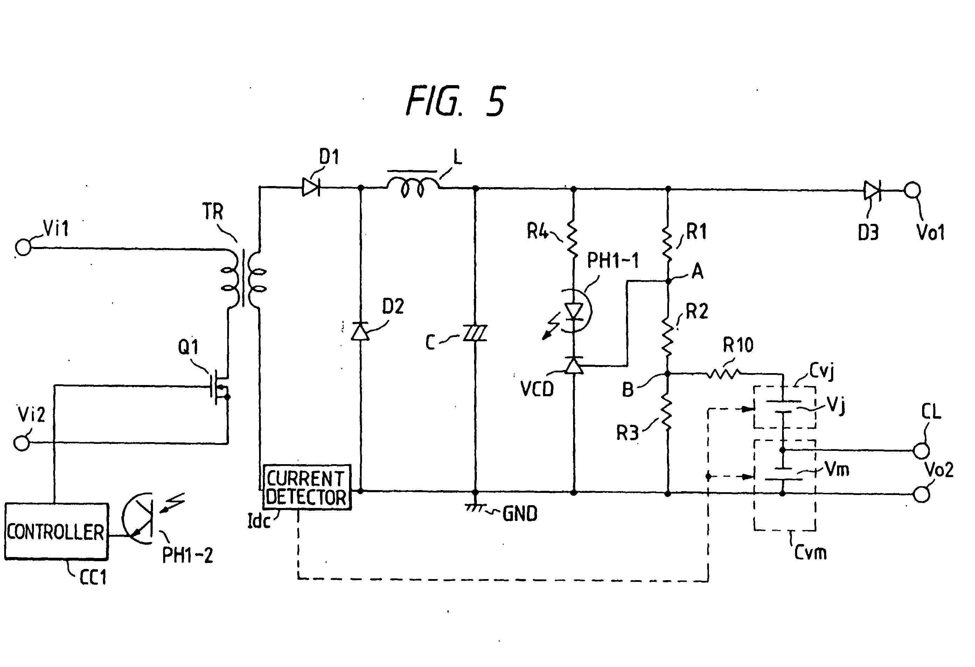

Fig. 5 is a concrete example showing the balance circuit between the output Vj of the respective current detection circuit Cvj and the output Vm of the maximum current detection circuit Cvm.

A resistor R10 is provided between the negative polarity terminal Vo2 (the ground) of the converter and the connecting point B between the resistors R2 and R3, and through this resistor R10 the negative output Vm of the maximum current detection circuit Cvm is connected in series to an output Vj of the respective current detection circuit Cvj. Accordingly, from the negative output Vm of the maximum current detection circuit Cvm and the output Vj of the respective current detection circuit Cvj are struck the balance.

Further, the control line CL is drawn from a connecting point between the maximum current detection circuit Cvm and the respective current detection circuit Cvj. During the parallel operation, through the control line CL the maximum current detection circuit Cvm operates to output a larger value from within the value obtained by the other converter and the value obtained by the current detection means Idc of the respective converter.

In the above stated construction, when the respective converter output the maximum current, the negative output Vm of the maximum current detection circuit Cvm is equal to the output Vj of the respective current detection circuit Cvj. Since the voltage to be added to the connection point B between the resistors R2 and R3 is zero, the voltage control does not receive an affect of the current control and the voltage fluctuation does not occur.

However, when the other converter output the maximum current, since the negative output Vm of the maximum current detection circuit Cvm is larger than the output Vj of the respective current detection circuit Cvj, the voltage to be added to the connection point B between the resistors R2 and R3 is the negative voltage.

Thereby, the voltage control receives the affect of the current control and the voltage of the condenser C is risen, further the current value of the respective converter rises and approaches to the current value of the other converter, thereby the current is balanced.

With the above stated operation, during plural number parallel operation even when some converter gets out of order and the output becomes zero, the fault converter having the current value of zero does not affect to the current control of the other converters.

Further, since the output of the converter has the diode D3, it is unnecessary to provide an apparatus in which by preventing the reverse flow of the current and by detecting the fault converter this fault converter can be cut off from the parallel operation arrangement through the switching means, as a result a simple construction converter can be obtained.

Further, without the use of a high cost and complicated circuit such as the operational amplifier etc., a simple construction circuit can be comprised of only the current transformer, the condenser and the diode can be constituted, and a compact construction circuit having a simple circuit construction can be provided.

By employing the above stated converters, since the redundant parallel operation is performed by the plural converters having the capacity in all more than the capacity of the load, the redundant parallel operation having a high reliability can be attained.

Fig. 5 is another concrete example showing a substraction (striking the balance) circuit of the output Vj of the respective current detection circuit Cvj and the output Vm of the maximum current detection circuit Cvm according to Fig. 4.

Between the negative polarity terminal Vo2 (the ground) of the converter and the connecting point between the resistors R2 and R3, the negative output Vm of the maximum current detection circuit Cvj is connected in series to the output Vj of the respective current detection circuit Cvm through the resistor R10.

Thereby, from the negative output Vm of the maximum current detection circuit Cvm, the output Vj of the respective current detection circuit Cvj is struck the balance.

Further, from the connecting point between the negative output Vm of the maximum current detection circuit Cvm and the output Vj of the respective current detection circuit Cvj, the control line CL is drawn out.

During the parallel operation, the maximum current detection circuit Cvm operates to output a larger value from within the value obtained by the other converter through the control line CL and the value obtained by the current detection means Idc of the respective converter.

With the above stated construction, when the respective converter output the maximum current, since the negative output Vm of the maximum current detection circuit Cvm is equal to the output Vj of the respective current detection circuit Cvj, the voltage being added to the connecting point B between the resistors R2 and R3 is zero. Accordingly, the voltage control does not receive the affect by the current control and the voltage fluctuation does not occur.

However, when the other converter output the maximum current, since the negative output Vm of the maximum current detection circuit Cvm is larger than the output Vj of the respective current detection circuit Cvj, the voltage being added to the connecting point B between the resistors R2 and R3 becomes the negative voltage.

Accordingly, the voltage control receives the affect by the current control and the voltage of the condenser C is risen, the current value of the respective converter rises and approaches to the current value of the other converter, thereby the current is balanced.

With the above stated operation, during plural number parallel operation even when some converter is gets out of order and the output of the fault converter becomes zero, the converter having the current value of zero does not affect to the current control of other converters.

Further, since the diode D3 is provided at the output side of the converter, it is unnecessary to provide an apparatus in which by preventing the reverse flow of the current and by detecting the fault converter this fault converter can be cut off from the parallel operation arrangement through the switching means, as a result a simple construction converter is obtained.

Further, without the use of a high cost and complicated construction circuit such as the operational amplifier etc., a simple construction circuit can be comprised of only the current transformer, the condenser and the diode can be constituted, and a compact construction circuit having a simple construction circuit can be provided. By employing the above stated converters, since the redundant parallel operation is performed by the plural converters having the capacity in all more than the capacity of the load, the redundant parallel operation having a high reliability can be attained.

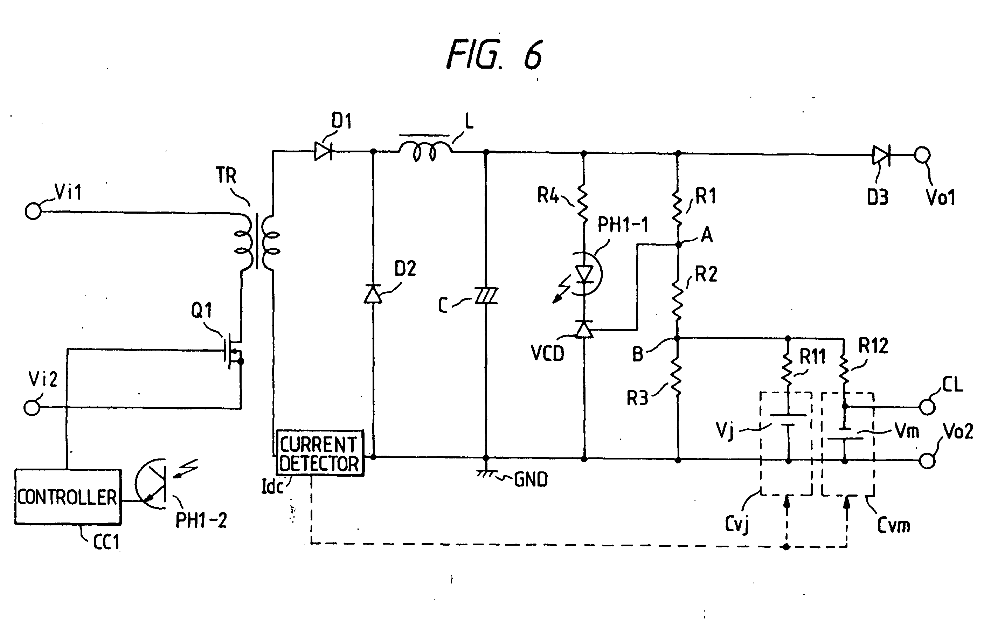

Fig. 6 is another concrete example showing the substraction circuit of the output Vj of the respective current detection circuit Cvj and the output Vm of the maximum current detection circuit Cvm.

Between the negative polarity terminal Vo2 (the ground) of the converter and the connecting point B between the resistors R2 and R3, the negative output Vm of the maximum current detection circuit Cvm through the resistor R12 is connected in parallel to the output Vj of the respective current detection circuit Cvj through the resistor R11. From the negative output Vm of the maximum current detection circuit Cvm and the output Vj of the respective current detection circuit Cvj are struck the balance.

Further, from the anti-ground side of the maximum current detection circuit Cvm, the control line CL is drawn out. During the parallel operation, the maximum current detection circuit Cvm operates to output a larger value from within the value obtained by the other converter through the control line CL and the value obtained by the current detection means Idc of the respective converter.

With the above stated construction, when the respective converter output the maximum current, since the negative output Vm of the maximum current detection circuit Cvm is equal to he output Vj of the respective current detection circuit Cvj, the voltage being added to the connecting point B between the resistors R2 and R3 is zero. Accordingly, the voltage control does not receive the affect by the current control and the voltage fluctuation does not occur.

However, when the other converter output the maximum current, since the negative output Vm of the maximum current detection circuit Cvm is larger than the output Vj of the respective current detection circuit Cvj, the voltage being added to the connecting point B between the resistors R2 and R3 becomes the negative voltage. Accordingly, the voltage control receives the affect by the current control and it operates to rise the voltage of the condenser C.

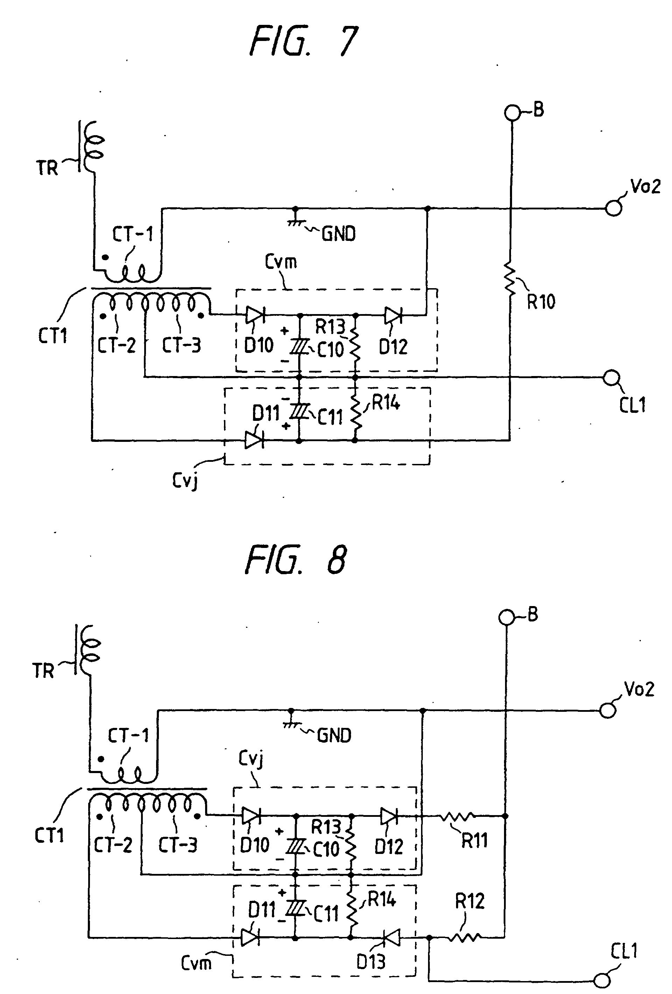

Fig. 7 is a concrete example of the current control shown in Fig. 5. Between the transformer TR used as the current detection means Idc in Fig. 4 and the ground GND, a primary side CT-1 of the current transformer CT1 is connected in series. At one of the secondary coils CT-2 of the current transformer CT1, a condenser C11 and a resistor R14 are connected through a diode D11.

Further, the positive polarity side of the condenser C11 is connected to the connecting point B through the resistor R10. In Fig. 7, the circuit shown by a lower area surrounded by dot lines is the respective current detection circuit Cvj shown in Fig. 5.

Besides, at another secondary coil CT-3 of the current transformer CT1 a condenser C10 and a resister R13 are connected through a diode D10, a positive polarity side of the condenser C10 is connected to the ground GND through a diode D12.

Further, a negative polarity side of the condenser C10 is connected to a negative polarity side of the condenser C11 (one of the secondary CT-2 and CT-3 of the current transformer CT) and further connected to the control line CL. The circuit shown by an upper area surrounded by dot lines is the maximum current detection circuit Cvm shown in Fig. 5.

During the parallel operation, the maximum current detection circuit Cvm operates to output a larger value from within the value obtained by the other converter through the control line CL and the value obtained by the current detection means Idc of the respective converter.

When the current of the transformer changes, the voltage proportional to this current generates at the secondary coils CT-2 and CT-3 of the current transformer CT-1.

By rectifying and smoothing each of those voltage through the respective current detection circuit Cvj and the maximum current detection circuit Cvm, the negative output Vm of the maximum current detection circuit Cvm and the output Vj of the respective current detection circuit Cvj are obtained, and the voltage obtained by striking the balance those voltages is added to the ground GND of the voltage control and the connecting point B.

As explained in Fig. 5, when the respective converter output the maximum current, since the negative output Vm of the maximum current detection circuit Cvm is equal to the output Vj of the respective current detection circuit Cvj, the voltage being added to the connecting point B between the resistors R2 and R3 is zero. Accordingly, the voltage control does not receive the affect by the current control and the voltage fluctuation does not occur.

However, when the other converter output the maximum current, since the negative output Vm of the maximum current detection circuit Cvm is larger than the output Vj of the respective current detection circuit Cvj, the voltage being added to the connecting point B between the resistors R2 and R3 becomes the negative voltage.

Accordingly, the voltage control receives the affect by the current control and the voltage of the condenser C is risen, the current value of this respective converter rises and approaches to the current value of the other converter, thereby the current is balanced.

With the above stated operation, during plural number parallel operation even when some converter gets out of order and the output becomes zero, the fault converter having the current value of zero does not affect to the current control of the other converters.

Further, since the output of the converter has the diode D3, it is unnecessary to provide an apparatus in which by preventing the reverse flow of the current and by detecting the fault converter this fault converter can be cut off from the parallel operation arrangement through the switching means, as a result a simple construction converter can be obtained.

Further, without the use of a high cost and complicated construction circuit such as the operational amplifier etc., a simple construction circuit can be comprised of only the current transformer, the condenser and the diode can be constituted, and a compact construction circuit having a simple construction circuit can be provided, especially by insulating using the current transformer.

By employing the above stated converters, since the redundant parallel operation is performed by the plural converters having the capacity in all more than the capacity of the load, the redundant parallel operation having a high reliability can be attained.

Fig. 8 is a concrete example of the current control shown in Fig. 6. Between the secondary side of the transformer TR and the ground GND, the primary side CT-1 of the current transformer CT1 is connected in series. The condenser C11 and the resistor R14 are connected through the diode D11 at one of the secondary coil CT-2 of the current transformer CT1.

Further, the negative polarity side of the condenser C11 is connected to the control line CL1 through the diode D13 and further is connected to the connecting point B shown in Fig. 6 through a diode D12 and a resistor R11 from the positive polarity side of the condenser C10. In Fig. 8, the circuit shown by a lower area surrounded by dot lines is the maximum current detection circuit Cvm shown in Fig. 6.

The negative polarity side of the condenser C10 is connected to the positive polarity side which is one of the secondary CT-2 and CT-3 of the current transformer CT and is connected to the ground GND.

With the above stated construction, when the current of the transformer changes, the voltage proportional to this current generates at the secondary coils CT-2 and CT-3 of the current transformer CT-1.

By rectifying and smoothing each of those voltage through the respective current detection circuit Cvj and the maximum current detection circuit Cvm, the negative output Vm of the maximum current detection circuit Cvm and the output Vj of the respective current detection circuit Cvj are obtained, and the voltage obtained by striking the balance those voltages is added to the ground GND and the connecting point B of the voltage control.

As explained in Fig. 6, when the respective converter output the maximum current, since the negative output Vm of the maximum current detection circuit Cvm is equal to the output Vj of the respective current detection circuit Cvj, the voltage being added to the connecting point B between the resistors R2 and R3 is zero. Accordingly, the voltage control does not receive the affect by the current control and the voltage fluctuation does not occur.

However, when the other converter output the maximum current, since the negative output Vm of the maximum current detection circuit Cvm is larger than the output Vj of the respective current detection circuit Cvj, the voltage being added to the connecting point B between the resistors R2 and R3 becomes the negative voltage.

Accordingly, the voltage control receives the affect by the current control and the voltage of the condenser C is risen, the current of this respective converter rises and approaches to the current of the other converter, thereby the current is balanced.

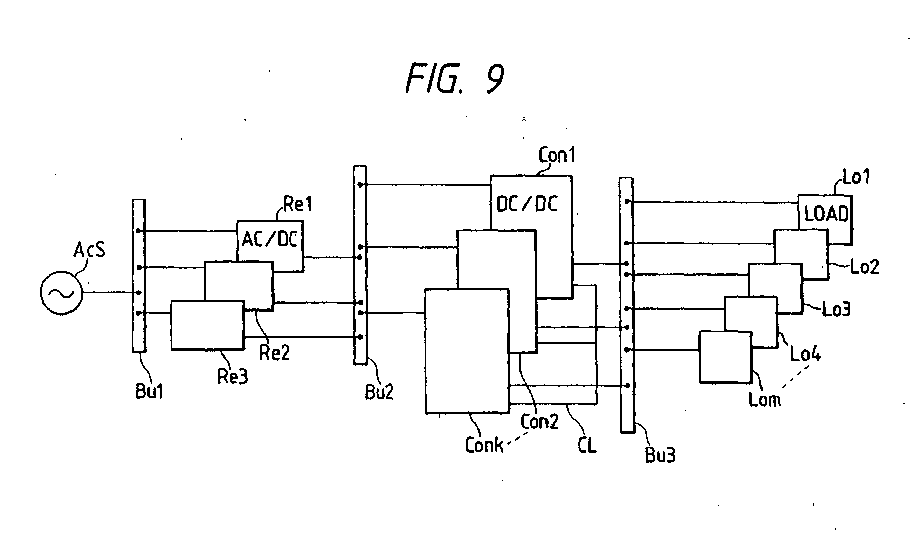

Fig. 9 is a block diagram showing a power supply system of another embodiment according to the present invention.

The constructive differences in the construction shown in Fig. 9 compared with the above stated construction shown in Fig. 1 are that the AC/DC converter ADcon shown in Fig. 1 is constituted to divide by the plural rectifying circuits Re1-Re3 and each of the input terminals and each of the output terminals of the rectifying circuits Re1-Re3 are connected respectively to common buses Bu1 and Bu2 which are common busses for a power wiring.

Further, an alternative current power supply AcS is connected to the common bus Bu1, the inputs of the plural DC/DC converters Con1-Conk are connected to the common bus Bu2 and further the outputs of the DC/DC converters Con1-Conk and the plural loads Lo1-Lom are connected to a common bus Bu3.

As stated in above, in the rectifying circuits Re1-Re3 for constituting the power supply system, by using the common buses Bu1, Bu2 and Bu3 the rectifying circuits Re1-Re3 are divided into in plural number, accordingly the redundancy in the power supply system of this embodiment according to the present invention can be further improved.

Further, in the construction of the power supply system shown in Fig. 9, when a capacity and a number of each load connected to the common bus Bu3 are expressed respectively by Wf and m, and a capacity and a number of the converter are expressed respectively by Wp and k, so as to be partially charged all loads by the converters, it can elect to consist a formula Wp x k ≥ Wf x m.

Herein, even when one converter gets out of order, in a case that an allowance failure number h able to operate the power supply system is 1, it can be attained by the selection to consist a formula Wp x (k-1) ≥ Wf x m. Further, in a case that the allowance failure number h is 2, it can be attained by the selection to consist a formula Wp x (k-2) ≥ Wf x m.

Further, when a capacity and a number of the rectifying circuits connected to the common bus Bu2 are expressed respectively by Wr and a, similarly to the above the relationship between the rectifying circuits and the converters, so as to attain the allowance failure number h having 1, it can be attained by the selection to consist a formula Wr x (a-1) ≥ Wp x k.

Similarly to, in the relationship between three elements comprised of the loads, the converters and the rectifying circuits, when the allowance failure number h of the converter and the rectifying unit is 1, it can be attained by the selection to consist a formula Wr x (a-1) ≥ Wp x (k-1) ≥ Wf x m.

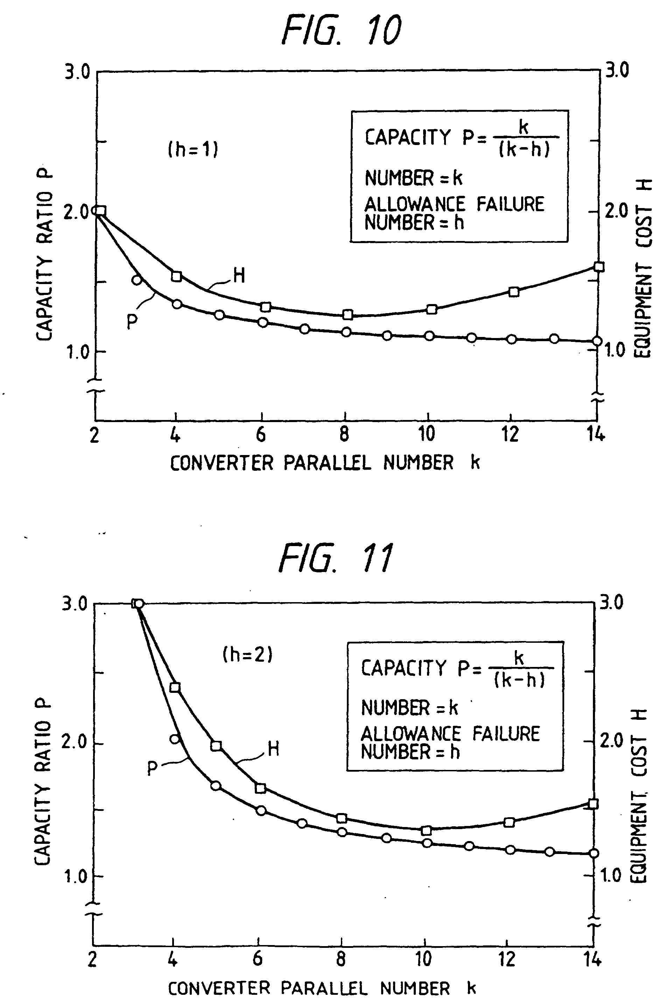

Fig. 10 is a view showing a relationship in which a parallel number k of the converters and a capacity ratio P of an equipment capacity (Wp x k) of the all converters with all loads (Wf x m), in case of the allowance failure number h = 1.

When the parallel number is 2, the capacity ratio P becomes two times of all loads, the parallel number k becomes large, it can be dispensed with the small capacity ratio P. Further, since an equipment cost H of the converter is proportional to the equipment ratio P and at the same time is proportional to the number of the converters, a curve line shown in figure can be obtained. Judging from this figure, the most economic parallel number k is 4-10.

Similarly to, as shown in Fig. 11, in a case of the allowance failure number h = 2, the relationship in which the parallel number k of the converter and the capacity ratio P of the equipment capacity (Wp x k) of the all converters with all loads (Wf x m) is shown in Fig. 11. Thereby, the most economic parallel number k is 6-12.

Judging from the above facts, when the allowance failure number is h, it is included within a range of a formula (2 + 2h) ≤ k ≤ (8 + 2h). When the parallel number of the converters is elected as stated in above, the redundancy having a high reliability in the power supply system can be assembled with a low cost and a small equipment capacity.

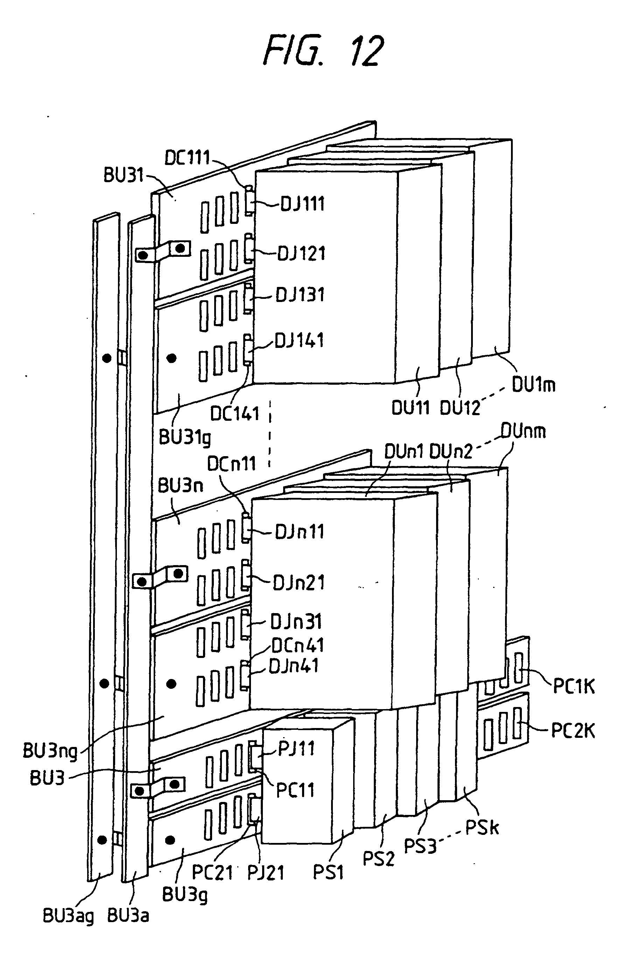

Fig. 12 is a view showing a construction in which a power supply system is assembled in a magnetic disk apparatus of another embodiment according to the present invention. In this figure, a concrete arrangement comprises the common bus Bu3, the magnetic disk apparatus and the AC/DC converter.

The power supply units PS1-PSk are constituted by the AC/DC converter. So as to directly connect outputs of the AC/DC converter to a plus side common bus BU3 and a minus side common bus BU3g, a common bus side of the AC/DC converter is constituted with sockets PC11-PC21 and a power supply unit side of the AC/DC converter is constituted with plugs PJ11-PJ21.

The plus side common bus BU3 is connected to common buses BU31p-BU3np through a next common bus BU3g. Similarly to, the minus side common bus BU3g is connected to common buses BU3g-BU3ng through a next common bus BU3ag.

The magnetic disks DU11-DU1m are connected to the common buses BU3 and BU3g through the sockets DC11-DC14 and the plugs DJ111-DJ141. This magnetic disks DUn1-DUnm are connected to the common buses BU3n and BU3ng through the sockets DCn1-DCn4 and the plugs DJn11-DJn41.

Since two sockets and two plugs of the magnetic disk are disposed in the power supply system, the connection is performed surely and the fixing is performed easily, thereby the failure in connection can be lessened.

By dividing the common buses of the load side into such as the common buses BU31-BU3n, even when the trouble generates at the load side, only divided common bus becomes down, the other common buses can be in effect safely. Further, the arrangement comprised of the common buses, the sockets and the plugs is formed, accordingly it is possible to insert and draw out easily the power supply unit and the magnetic disk, and further the extensions of the power supply unit and the magnetic disk can be performed easily.

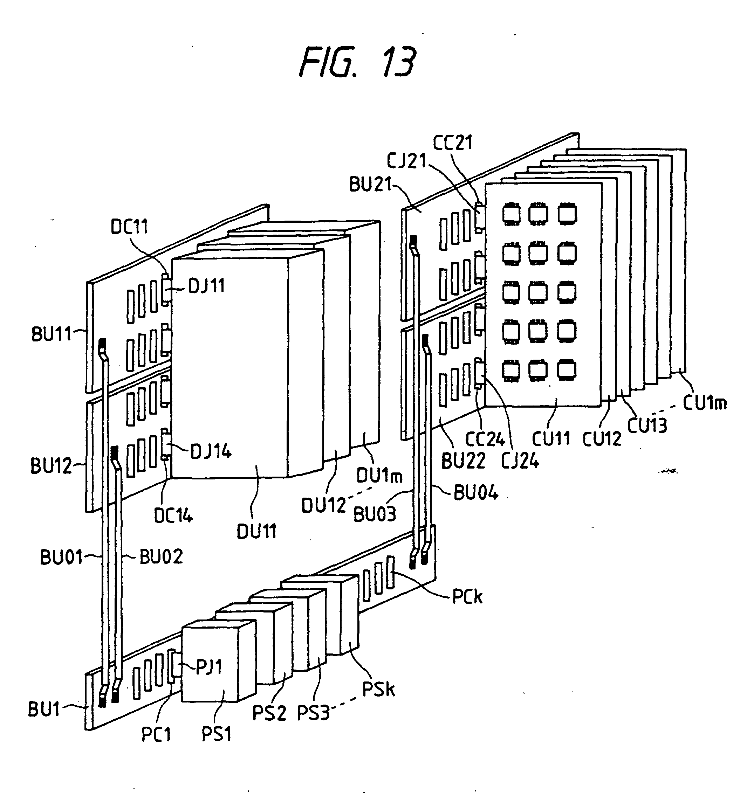

Fig. 13 is an example showing an arrangement composed of the magnetic disks, the converters and the control circuits for the magnetic disks. In this figure, the negative polarity side of the common bus is omitted from.

So as to directly connect the outputs of the power supply units PS1-PSk constituted by the converters to the common bus BU1, a common bus side of the power supply units PS1-PSk is constituted with sockets PC1-PCk and a power supply unit side of the power supply units PS1-PSk is constituted with plugs PJ1-PJk. The common bus BU1 is connected to the common buses BU11-BU12 and the common buses BU21-BU22 through next common buses BU01-BU04.

Further, the magnetic disks DU11-DU1m are connected to the common buses BU11 and BU12 through the sockets DC11-DC14 ... and the plugs DJ111-DJ141 ... . The control circuits CU11-CU1m are connected to the common buses BU21 and BU22 through the sockets CC21-CC24 ... and the plugs CP11-CP41 ... .

Since two sockets and two plugs of the magnetic disk and the control circuit are disposed respectively in the power supply system, the connection is performed surely and the fixing is performed easily, thereby the contact failure in connection can be lessened.

By dividing the common buses of the load side into such as the common buses BU11 and BU12 and the common buses BU21 and BU22, even when the trouble generates on one common bus, since the other common buses can be in effect safely, the power supply system does not become down.

Further, the arrangement comprised of the common buses, the sockets and the plugs is formed, accordingly it is possible to insert and draw out easily the power supply unit and the magnetic disk, the extensions of the power supply unit and the magnetic disk can be performed easily.

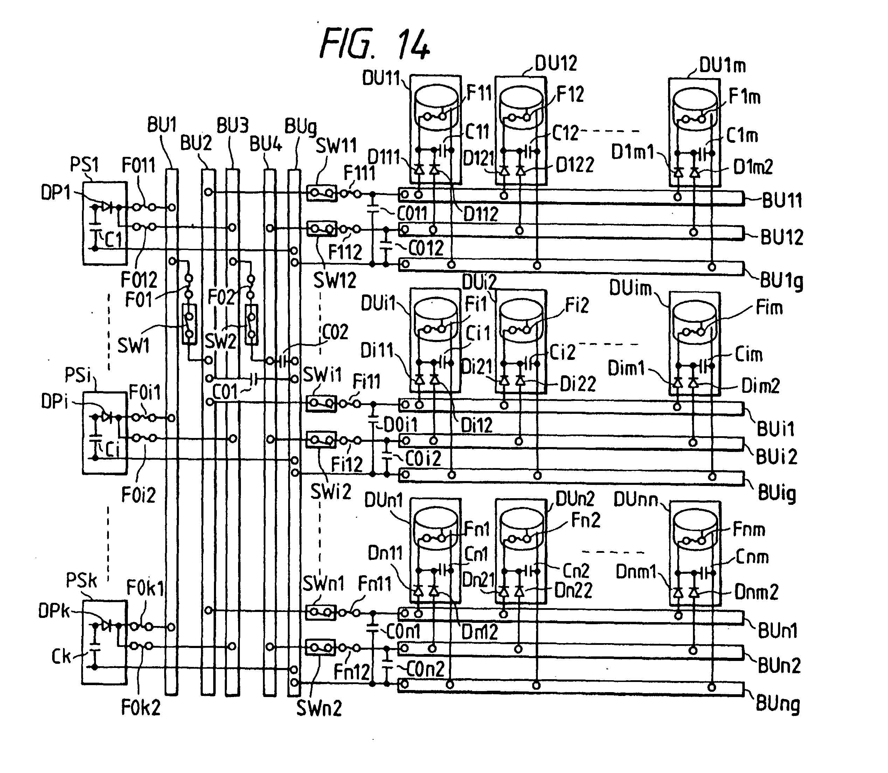

Fig. 14 is an example showing the connection composed of the plural converters, the plural magnetic disks being the loads and the common buses. In this example, the plural common buses are arranged and are made with the multiplex construction and also by dividing the magnetic disks the common buses to be connected to the magnetic disks are made classified.

First of all, the magnetic disks being the loads are divided into plural groups comprised of a group of DU11-DU1m, .... , a group of DUi1-DUim, ... , and a group of DUn1-DUnm. By providing the magnetic disks to every group each, the groups are connected to the plural common buses composed of a group of BU11-BU1g, ... , a group of BUi1-BUig, ... , and a group of BUn1-BUng, which are arranged as shown in figure.

The magnetic disks DU11-DU1m are connected to the common bus BU11 through diodes D111-D1m1 and further connected to the common bus BU12 through diodes D112-D1m2. Further, each of the negative polarity side of the magnetic disks DU11-DU1m is connected to the common bus BU1g and can receive to the supply of the electric power.

The magnetic disks DUi1-DUim, ... , and DUn1-DUng of the other groups are connected similarly to the first common buses BUi1-BUig, ... , and BUn1-BUnm. These positive polarity side common buses are connected to a second common buses BU2 and BU4 through fuses F11-F12, ... , Fi1-Fi2, ... , and Fn1-Fn2 and switches SW11-SW12, ... , SWi1-SWi2, ... , and SWn1-SWn2.

Each of the negative polarity side of the first common buses BU1g, ... , BUig, ... , and BUng is connected to the negative polarity side of each converter PS1, ... , PS2, ... , and PSk and further is directly connected to the second common bus BU5. Further, the second common buses BU2 and BU4 are connected to the common buses BU1 and BU3 through the switches SW1 and SW2 and the fuses F1 and F2, respectively.

Each of the common buses BU1 and BU3 is connected respectively to each of the converters PS1, ... , PS2, ... , and PSk through the fuses FO11, ... , FO12, ... , and FOk1 and FO21, ... , FO22, ... , and FOk2.

Each of the outputs of the converters is connected respectively to the diodes DP1, ... , DPi, ... , and DPk and further the reverse current flow is prevented from. Further, between the positive polarity side and the negative polarity side of each of the first common buses, the condensers CO11, CO12, ... , COi1, COi2, ... , and COn1, COn2 are connected, similarly to each of the second common buses is connected to the condensers CO1, CO2.

As stated in above, the common buses are constituted with the multiplex construction, for example, in a case that the short-circuit accident occurs in the first common bus BU11, the fuse F11 is cut off this common bus BU11 becomes down. However, to the group of the magnetic disks DU11-DU1m, the other first common bus BU12 supplies to the electric power, thereby the system does become to stop, and further the high reliability in the system can be secured.

Further, since the common buses are classified, in a case of the repair working with the short-circuit of the first common bus BU11, the repair working is carried out by opening the switch SW11. When the repair working has completed, the fuse F11 is exchanged and after the switch SW11 is thrown into again, accordingly the maintenance in the system can be performed easily.

When the first common bus BU11 is under the repairing working, in the other magnetic disk group, the current is supplied from the double system common bus, thereby even when one system of the common buses gets out of order, the system does not become down. Since the other first common bus is constituted similarly to the above construction, the high reliability in the system can be attained.

Further, since the second common bus is constituted also with the double system construction, one common bus gets out of order, the system does not become down. The condenser inserted in each common bus performs the stability in the voltage and also in a case of the short-circuit of the common bus the fuse melting is carried out easily, and the affect to the other common buses is lessen.

Further, it has an effect in which the fluctuation in voltage of the insertion with a live state or the drawing of the magnetic disk being the load can be prevented from.

The magnetic disk is used as the memory of the computer, since the length of the data for dealing is constituted with the multiple of 8 bits, accordingly it is convenient to constitute the group of the magnetic disk for connecting a pair of the common buses with the multiple of 8 bits.

Further, with respect to the line of the data for recording since the magnetic disk is also constituted with the multiple of 8 bits, the number of the first common bus is constituted with the multiple of 8 bits and the line of the recording data is made to have a different common bus direction.

For example, the magnetic disks DU11, ... , DUi1, ... , and DUn1 are arranged as the data line, even when the common buses BU11 and BU12 of one group completely get out of order, the data of 1 bit being gotten out of order can be reproduced according to the parity and 7 bits.

Further, when in a case of an increase of the magnetic disk, 1, ... , i, ... , and n being the line of the data are made as one set, the magnetic disk is increased toward the direction of 1, ... , and m, and in response to the increase number of this magnetic disk the number of the converter PS is increased. Accordingly, and a superior construction having the high reliability and the high efficiency in the system can be obtained.

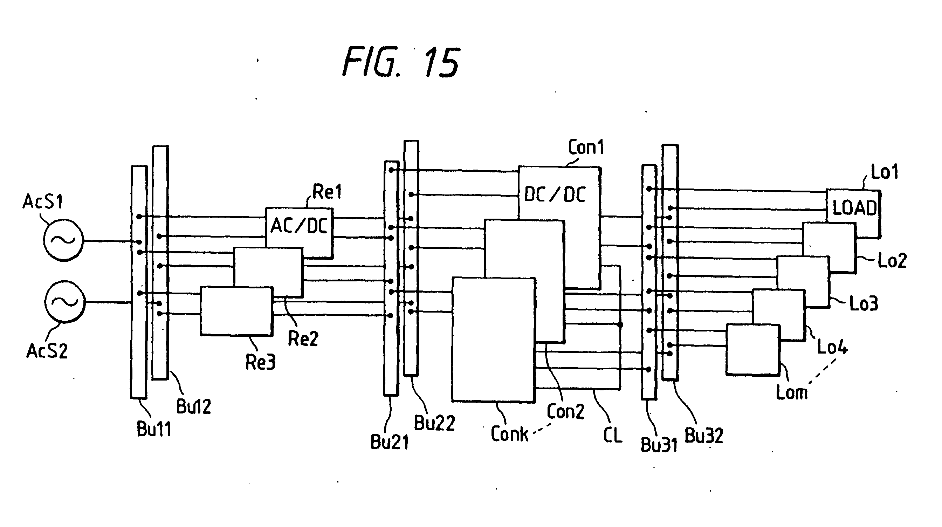

Fig. 15 is a view showing an embodiment of the provision of the plural common buses. In this figure, the common buses are formed with the multiplex construction in which two number of the common buses Bu1, Bu2, Bu3 are used respectively.

In the construction shown in this figure, the ground sides of the common buses are omitted from. However, since the common buses are formed with the multiplex construction, one common bus occurs the accident such as the wire-break, it does not dispense with to stop the system, accordingly it is possible to improve the reliability in the system.

The common bus Bu11 is connected to the alternative current power supply AcS1 and each of the outputs of the rectifying units Re1-Re3. The common bus Bu12 is connected to the alternative current power supply AcS2 and each of the outputs of the rectifying units Re1-Re3. With this construction, even one alternative current power supply gets out of order, the system is not become down.

Further, the common buses Bu21 and Bu22 are connected to the outputs of the plural rectifying units Re1-Re3 and the inputs of the plural converters Con1-Cconk. The common buses Bu31 and Bu32 are connected to the outputs of the plural DC/DC converters Con1-Cconk and the plural loads Lo1-Lom.

With the above construction, in the common buses Bu31 and Bu32, the capacity and the number of each load are expressed respectively as WL and m, the capacity and the number of the converter are expressed respectively as Wc and k. In this case, some converter gets out of order, the system having the high reliability against the failure can be obtained.

Namely, when the allowance failure number h for continuing the operation is 1, each number of the load and the converter is selected to consist a formula Wc x (k-1) ≥ WL x m, and when the allowance failure number h is 2, each number of the load and the converter is selected to consist a formula Wc x (k-2) ≥ WL x m.

In other words, one or two rectifying units Re1-Re3 and the converters gets out of order, the system does become down and also one of the common buses occurs the failure such as the wire-break the system does not reach to be down, accordingly the system having high reliability can be constructed.

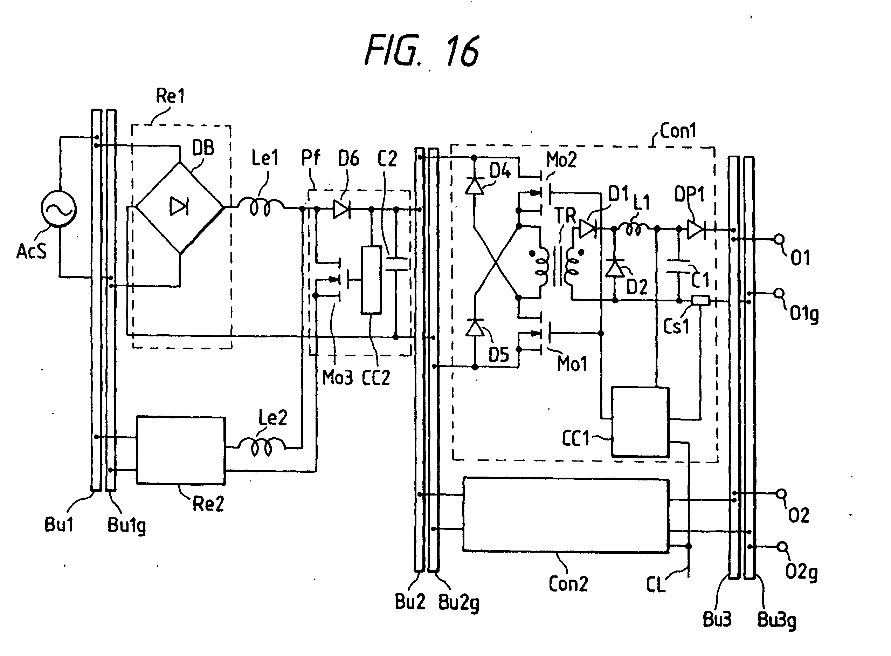

Fig. 16 is a constructive view showing a power supply system of another embodiment according to the present invention. In the power supply system of this embodiment, a power factor improvement circuit is further provided in the above stated former construction of the power supply system,.

The outputs of the rectifying units Re1 and Re2 constituted by a diode bridge DB are connected to a power factor improvement circuit Pf through the inductances Le1 and Le2. By this construction, the power-factor improvement circuit can be dispensed only one, thereby it can obtain the effects in which a compact and a low cost power supply system is manufactured.

Further, in this figure, using the plus side common buses Bu1, Bu2 and Bu3 and the minus side common buses Bu1g, Bu2g and Bu3g, the common buses Bu2 and Bu2g are connected to the alternative current supply AcS and the inputs of the plural rectifying units Re1-Re2.

The common buses Bu2, Bu2g are connected to the outputs of the plural rectifying units Re1-Re2 through the power factor improvement circuit Pf and further are connected to the inputs of the plural DC/DC converters Con1-Con2. The common buses Bu3 and Bu3g are connected to the outputs of the DC/Dc converters Con1-Con2. Accordingly, plural outputs O1, O2 are supplied to the load.

Herein, the construction and the operation of the above stated power-factor improvement circuit Pf will be explained. A semiconductor switch Mo3 is constituted to make the short-circuit to the output of the rectifying unit Re1 through the inductance Le1 and further is connected to a condenser C2 through a diode D6. The semiconductor switch Mo3 is controlled to form the condenser C2 having a predetermined terminal voltage Vc2.

With the above operation, in proportional to the difference in voltage between the output voltage Vdb of the full-wave rectification diode bridge and the terminal voltage Vc2 of the condenser C2, thereby a ratio of the on/off (duty) is controlled.

During the terminal voltage Vc2 of the condenser C2 is lower than the output voltage Vdb of the full-wave rectification diode bridge, the on/off ratio becomes large, and by the large energy accumulated in the inductance Le1 it works to flow the current to the condenser C2.

Further, the terminal voltage Vc2 of the condenser C2 becomes larger than the output voltage Vdb of the full-wave rectification diode bridge, the on/off ratio becomes small, and by the small energy accumulated in the inductance Le1 the current charged in the condenser C2 is prevented from enlarging excessively.

With the above stated operation, the current flowing from the alternative current is prevented from making in pulse form and the power factor at the alternative current side can approximate to 1.

Besides, the DC/DC converter Con1 shown in this figure is given the voltage of the condenser C2 as the input through the common bus Bu2. This DC/DC converter Con1 is a double forward type converter, at the primary side thereof two MOS transistors Mo1 and Mo2 and the transformer TR are connected in series. Further, the diodes D4 and D5 are connected by crossing each of the transistors MO1 and MO2 and the transformer TR as shown in figure. The secondary side of the DC/DC converter Con1 is constituted by the diodes D1 and D2, the inductance L1 and the condenser C1.

Herein, according to the control circuit CC1 the ratio of the on/off (duty) of the transistors Mo1 and Mo2 is controlled by feed-backing the voltage of the condenser C1 and the load current detected through the current sensor Cs1. The diode DP1 prevents from reversal flowing the voltage from other converter during the parallel operation of the converter Con2 and the control line CL is a control signal for parallel operation of the converter and this signal indicates a standard signal for the current control.

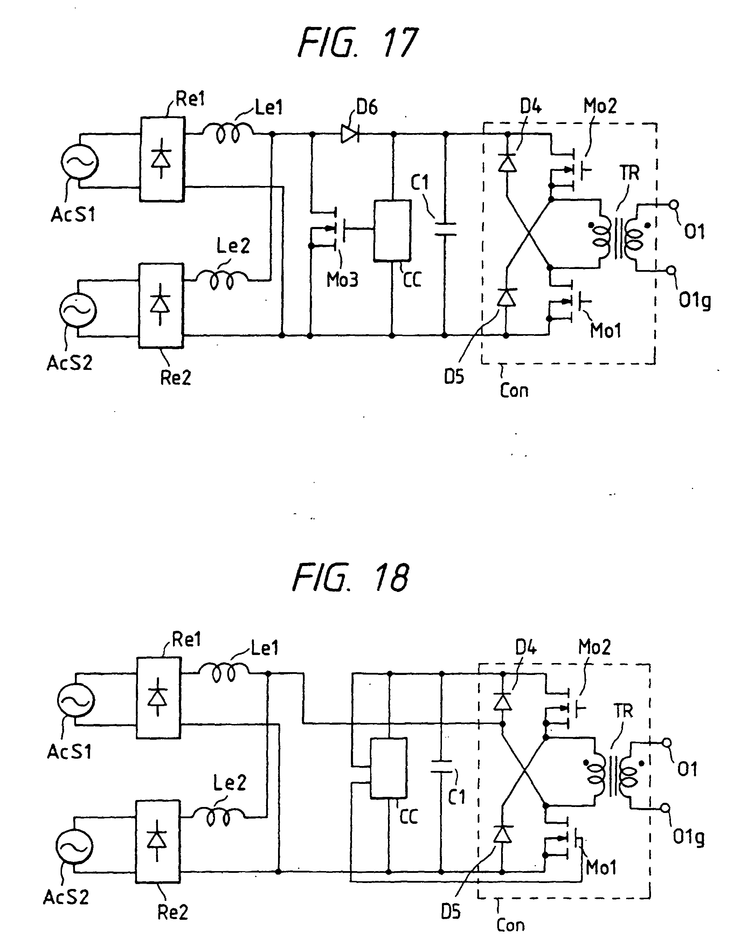

Fig. 17 is a constructive view showing a further embodiment of a power supply system according to the present invention. The portion different from the construction shown in Fig. 16 is that two alternative current inputs are processed according to one power factor improvement circuit.

Each of the alternative current supplies AcS1 and AcS2 ia connected to MOS transistor Mo3 during the "on" condition through the rectifying units Re1 and Re2 and the inductance Le1. Further during the "off" condition of the MOS transistor Mo3, the energy accumulated in the inductances Le1 and Le2 is connected to charge the condenser C1 through a diode D6.

In the power factor improvement operation similarly to the above, the duty being the on/off ratio of the MOS transistor Mo3 is controlled at constant the voltage of the condenser C1 according to the control circuit CC. When the voltage of the condenser C1 becomes higher, the duty is made small and the increase in the current for flowing into the condenser C1 is suppressed.

With the above stated way, when the voltage in the rectifying unit is high, the current is operated to suppress, besides the voltage in the rectifying portion is low, the current is operate to flow. Accordingly, the pulse-like current flown from the alternative current supply is suppressed and approximates the sign wave as same to the voltage, thereby the high power factor having a small higher frequency in the system can be obtained.

Further, since this function operates similarly to the both inductances Le1 and Le2, with respect to the respective alternative current supply the input current can be made to approximate the sign-wave. Also, the power factor improvement circuit can be dispensed only one, so that a compact power supply system can be obtained.

Fig. 18 is a constructive view showing a further embodiment of a power supply system according to the present invention. The portion different from the construction shown in Fig. 17 is that by omitting the element for the power factor improvement and using two switching elements for used in the double forward type converter, thereby the power-factor improvement can be attained.

The DC/DC converter Con is the double forward type converter as shown in figure. Two MOS transistors Mo1 and Mo2 are connected to the transformer TR in series, and the diodes D4 and D5 are connected to cross with each of the transistors Mo1 and Mo2 and the transformer TR as shown in figure.

The outputs of the alternative current supplies AcS1 and AcS2 are connected to make the short-circuit to the switching element Mo1 through the rectifying units Re1 and Re2 and the inductances Le1 and Le2. Further, the control circuit CC for controlling the switching element Mo1, not shown in figure, controls the output voltage of the converter and also controls to the voltage of the condenser C1 at constant. In this construction, the switching element Mo1 and the diode D4 operate to serve both the operation for the converter and the operation for the power factor improvement.

In this circuit, when the switching elements Mo1 and Mo2 are controlled under a certain condition, both the converter operation and the power factor improvement can be attained at the same time. The above condition is that the control of the converter is performed by the switching elements Mo1 and Mo2 and the power factor improvement is performed by the switching element Mo1.

The power factor improvement operation is performed by making longer the "on" period of the switching element Mo1 than the "on" period of the switching element Mo2. The operation is that according to the difference in the "on" period the inductances Le1 and Le2 are made the short-circuit and the energy is accumulated and further during the "off" period of the switching element Mo1 the accumulated energy is accumulated in the condenser C1 through the diode D4.

So as to carry out the above, the control circuit CC controls the difference between the "on" periods in the switching elements Mo1 and Mo2 so as to make the voltage of the condenser C1 at constant. When the voltage of the condenser C1 becomes high, the above difference in the "on" periods is made small, thereby the increase in the current for flowing into the condenser C1 is suppressed.

By the above stated operation, when the voltage of the rectifying unit is high, the current is suppressed, besides when the voltage of the rectifying unit is low, the current is operated to flow.

Accordingly, the pulse-like current flown from the alternative current supply is suppressed and approximates the sign wave as same to the voltage, thereby the high power factor having a small high frequency in the system can be obtained. Further, since this function is operated similarly to the both inductances Le1 and Le2, with respect to the respective alternative current supply the input current can be made to approximate to the sign wave.

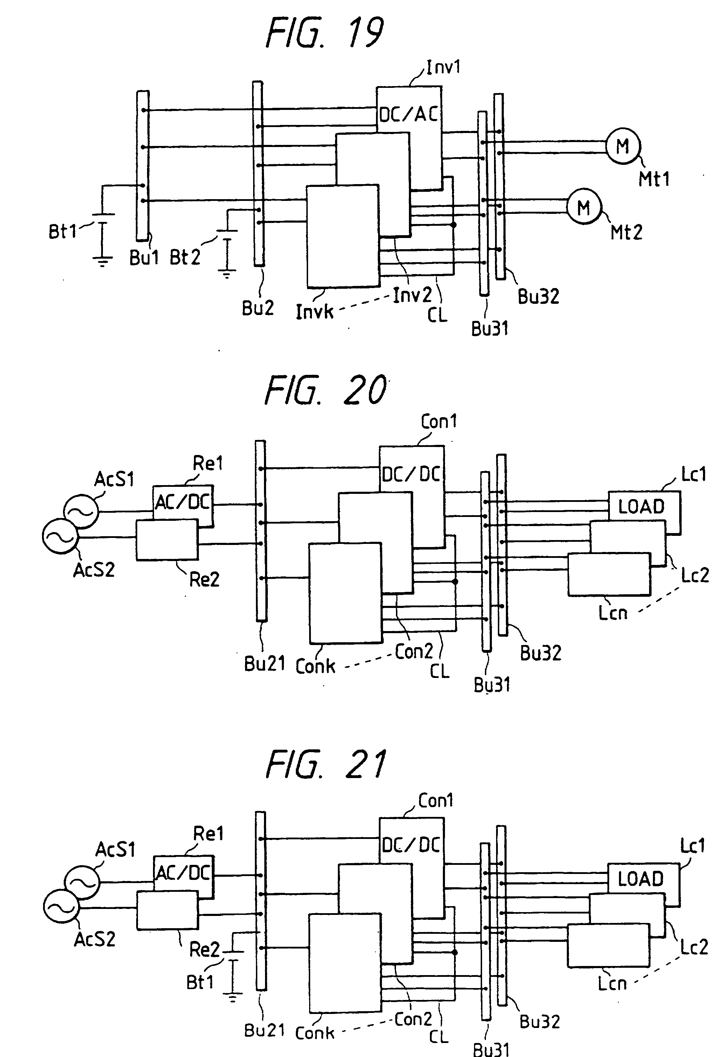

Fig. 19 shows an example showing an application of the power supply system according to the present invention to a motor for driving an electric car. In the electric car, the electric power is supplied to an inverter from a battery and according to DC/AC converting the DC/AC the direct current of the alternative current by this inverter the alternative current output is obtained and the motor is driven by this obtained alternative current output.

In this example, so as to improve the reliability in the apparatus, a common bus is connected between plural batteries Bt1 and Bt2 and plural inverters In1-Ink. Thereby, when one of the batteries becomes down, the electric power is supplied from another battery, so that the system does not be down. Further, the common buses Bu31 and Bu32 are connected to between the plural inverters Inl-Ink and the plural motors Mt1 and Mt2.

With the above construction, in the common buses Bu31 and Bu32, the capacity and the number of each load are expressed respectively as Wm and m, the capacity and the number of the inverter are expressed respectively as Wc and k. So as to partially charge all loads by all inverters, it can select to consist a formula Wp x k = Wm x m.

However, one inverter gets out of order, when the allowance failure number h for continuing the operation of the system is 1, it can select to consist a formula Wp x (k-1) ≥ Wf x m. Further, when the allowance failure number h is 2, it can select to consist a formula Wp x (k-2) ≥ Wf x m.

Further, in the common bus Bu2, the capacity and the number of the battery are expressed respectively by Wb and a, similarly to the relationship between the battery and the inverter, when the allowance failure number h is 1, it can be attained by selection so as to consist a formula Wb x (a-1) ≥ Wf x m.

By the above selections, even when one inverter gets out of order, since the motor is supplied the electric power from another inverter, the system does not become down and can operate normally, accordingly the system having high reliability can be obtained.

Herein, since the ground side of the common bus is omitted from, by making the multiplex construction for the common buses Bu31 and Bu32, even when the failure such as the wire-break is occurred in one common bus, the system is dispensed with not to stop, accordingly it is possible to improve the high reliability in the system.

Fig. 20 is an example showing an application of the power supply system according to the present invention to a computer. The direct current voltage which is the outputs of the alternative current supplies AcS1 and Acs2 is supplied to the common bus Bu21 through the rectifying units Re1 sand Re2. The common bus Bu21 is connected to the converters Con1-Conk. The outputs of the converters Con1-Conk are connected to the loads Lc1-Lcn through the common buses Bu31 and Bu32. The converters Con1-Conk are connected by the control line CL and the maximum current control is carried out.

With the above stated construction, from the alternative current supply to the loads the multiplex construction is formed by a minimum construction, thereby the power supply system having the simple construction and the high reliability can be obtained.

Fig. 21 is an example showing a further improvement of the reliability for the power supply system shown in Fig. 20. In the power supply system construction shown in Fig. 21, the battery Bt1 is connected to the common bus Bu21 having the direct voltage. With this construction, even when the alternative current power supply gets out of order, it can continue to operate by the battery, thereby the power supply system having the high reliability can be obtained.

As stated in above, according to the present invention, each of the current values of the plural converters is detected, the maximum current control system is carried out, in this maximum current control the current value of each converter is matched to the maximum current among the detected current values.

Even when the converter during the parallel operation, such a converter having the output current value of zero by the failure is included, then the remaining converters can be partially charged to the load.

Further, the common bus is arranged between the plural converters and the plural loads, and by making a certain relationship between the converters and the loads the redundant operation having the high reliability in the power supply system can be attained. Further, the plural alternative current inputs having the redundant in the power supply system can be controlled by only one power factor.improvement circuit construction.

## Claims

1. A power supply system comprising:
a plurality of electric power converters (Con1 - Con4), each for converting an input current to a direct current having a predetermined voltage, outputs of said converters (con1 - Con4) being connected in parallel to supply electric power to a load (Lo);
a current detection means (Cs) for detecting a magnitude of output current (Cs1) of each of said plurality of converters (Con1 - Con4);
a maximum current detection means ((CCs1, OP2, D3', CL) of CC1) for detecting a maximum output current value among the output current values (Cs1) of said converters (Con1 - Con4) detected by said current detection means (Cs);
a control means (OP1, Rf, Vs1, PWM) of CC1) for controlling the output current values and the output voltage values of said plurality of converters (Con1 - Con4), comprising:
- a determination means ((CCs1, OP2, D3', CL) of CC1) for comparing said detected maximum output current value with said detected output current values of each of said converters (Con 1 - Con4),
- means ((OP1, Rf, Vs1, PWM) of CC1) for controlling each of said output current values of said converters (Con1 - Con4) such that they match with said detected maximum output current value of said converters (Con1 - Con4) and such that even in case that one of the plurality of converters (Con1 - Con4) is defective and its output current value is zero, the output current values of the remaining converters are the same as said detected maximum output current value;
**characterized in that**
each of said converters (Con1 - Con4) is provided with a diode (DP1) for preventing a reverse flow of current;
the number of converters(Con1 - Conk), when an allowable failure number of said converter (Con1 - Conk) is expressed by h, and the number of said plurality of converters (Con1 -Conk) connected in parallel is expressed by k, is selected so as to satisfy a relationship (2 + 2h) ≤ k ≤ (8 + 2h).

2. A power supply system according to claim 1, **characterized in that** each of said converters (Con1 - Con4) comprises
a transformer (TR) to convert alternating or direct current to direct current having a predetermined voltage; and
the power supply system comprising:
a current value detection means (Idc) for detecting a current value flowing in a secondary coil of said transformer (TR);
a respective current value detection circuit (Cvj) for detecting a DC output current value of said respective converter (Con1 - Con4);
a maximum current value detection circuit (Cvm) for comparing current values from said respective current value detection means (Cvj) of said respective converters (Con1 - Con4) for detecting a maximum current value among said compared current values; and
an addition means for adding a difference between said maximum current value of said respective converter (Con1 - Con4) and said output current value of said respective converter (Con1 - Con4) to said voltage value control means ((Vs1, Rf, PWM) of CC1).

3. A power supply system according to claim 1, **characterized in that** it is comprising further:
an AC power supply (AcS) connected to a first common bus (Bu1);
a plurality of rectifying means (Re1 - Re3) for converting an alternating current from said first common bus (Bu1) to a direct current;
a second common bus (Bu2) connected to direct current outputs of said plurality of rectifying means (Re1 - Re3) a plurality of DC/DC converters (Con1 - Conk) coupled to receive a DC input from said second common bus (Bu2) for converting the alternating current to a direct current having a predetermined voltage; and
a third common bus (Bu3) connected to DC outputs of DC/DC converters (Con1 - Conk) being supplied to a plurality of loads (Lo1 - Lom) through said third common bus (Bu3).

4. A power supply system having a plurality of converters (PS1 - PSk) for supplying direct current electric power to a plurality of loads (DU11 - DU1m; ...; DUn1 - DUnm), according to claim 1, **characterized in that**:
said plurality of loads (DU11 - DU1m; ...; DUn1 - DUnm) are divided into plural groups (DU11 - DU1m; ...; DUn1 - DUnm);
a first common bus (BU11, BU12, ..., BU1g) supplies electric power to a first group (DU11 - DU1m) of said plurality of loads (DU11 - DU1m; ...; DUn1 - DUnm);
a first cluster is comprised of said first common bus (BU11, BU12, ..., BU1g);
a second cluster are connected to said first cluster in plural;
a second common bus (BU21, BU22, ..., BU2g) supplies commonly electric power to said second cluster;
said plurality of converters (PS1 - PSk) are connected to said second common bus (BU21, BU22, ..., BU2g); and
through said first and second common buses (BU11, BU12, ..., BU1g; BU21, BU22, ..., BU2g) electric power is given and supplied.

5. A power supply system according to claim 4, **characterized in that** the power supply system comprising:
a third cluster for supplying electric power to said second common bus (BU21, BU22, ..., BU2g) and said second cluster;
by providing common buses classified x degree (x being an integer) said plurality of converters (PS1 - PSk) are connected to the highest classified degree common bus; and the electric power is given and supplied.

6. A power supply system according to claim 4, **characterized in that** the power supply system comprising:
a single ground side (BU11, BU12, ..., BU1g) of each of said first common bus (BU11, BU12, ..., BU1g) and said second common bus (BU21, BU22, ..., BU2g);
plural anti-ground sides (BU21, BU22, ..., BU2g) of each of said first common bus (BU11, BU12, ..., BU1g) and said second common bus (BU21, BU22, ..., BU2g) are connected in parallel; and
through said plural classified common buses the electric power is given and supplied.

7. A power supply system according to claim 4, **characterized in that** the power supply system comprising:
a fuse (F111 - F112; ...; Fn11 - Fn12; F01, F02) provided at an anti-ground side of each of said first common bus (BU11, BU12, ..., BU1g) and said second common bus (BU21, BU22m ..., BU2g); and
a capacity of said fuse (F111 - F112; ...; Fn11 - Fn12) of said first common bus (BU11, BU12, ..., BU1g) is smaller than a capacity of said fuse (F01, F02) of said second common bus (BU21, BU22, ..., BU2g).

8. A power supply system according to claim 4, **characterized in that** the power supply system comprising:
a switch (SW11, SW12, ..., SWn1, SWn2; SW1, SW2) for cutting off a supply of the electric power at an anti-ground side of said first common bus (BU11, BU12, ..., BU1g) and said second common bus (BU21, BU22, ..., BU2g).

9. A power supply system according to claim 4, **characterized in that** the power supply system comprising:
a condenser (C01, C02) connected between a ground side and an anti-ground side of each of said first common bus (BU11, BU12, ..., BU1g) and said second common bus (BU21, BU22, ..., BU1g) and said second common bus (BU21, BU22, ..., BU2g).

10. A power supply system according to claim 4, **characterized in that** the power supply system comprising:
a diode (D111 - D112, ..., D1n1 - D1n2) connecting said first common bus (BU11, BU 12, ..., BU1g) and a magnetic disk apparatus (DU11 - DU1m, ..., DUn1 - DUnm).

11. A power supply system according to claim 4, **characterized in that** the power supply system comprising:
8 x x (x: integer number) number magnetic disk apparatuses (DU11 - DU1m, ..., DUn1 - DUnm) connected to said first common bus (BU11, BU12, ..., BU1g), supplying the electric power.

12. A power supply system according to claim 4, **characterized in that**
8 x x (x: integer number) number first clusters are arranged.

13. A power supply system according to claim 4, **characterized in that**
relating to a bit direction of data being recorded on a magnetic disk apparatus, a first bit is recorded on a first cluster, a second bit is recorded on a second cluster, and n number bit is recorded on n number cluster.

14. A power supply system according to claim 1, the power supply system comprising:
a load group (Lo1 - Lom) having a plurality of loads (Lo1 - Lom);
a converter group (Con1 - Con4) having a plurality of DC/DC converters (Con1 - Con4);
a plurality of rectifying units (Re1 - Re3);
a plurality of AC power supplies (AcS1, AcS2); and through at least one common bus (BU11, BU12, ..., BU1g; BU21, BU22, ..., BU2g) connected between said load group (Lo1 - Lom) and said converter group, (Con1 - Con4) and said rectifying units (Re1 - Re3) and said plurality of AC power supplies (AcS1,AcS2),
whereby the electric power is supplied to said plurality of loads (Lo1 - Lom).

15. A power supply system according to claim 1, the power supply system comprising:
a single power factor improvement circuit (Pf) coupled to rectify outputs from a plurality of AC power supplies (AcS1, AcS2) through respective rectifying elements (Re1, Re2);
relating to each of said rectifying outputs, through respective inductances (Le1, Le2), in said single power factor improvement circuit (Pf), a power factor of each of said AC power supplies (AcS1, AcS2) is improved by a switching operation at a higher frequency than that of said AC power supply (AcS1, AcS2) through a switching element (Mo3); and
said rectified outputs are supplied to a plurality of converters (Con1, Con2) as the electric power through a common bus (Bu2, Bu2g).

16. A power supply system according to claim 15, **characterized in that**
by controlling a duty ratio of said switching element (Mo3), a terminal voltage of a smoothing condenser (C2) which is provided at an output side of said power factor improvement circuit (Pf) is maintained substantially constant.

17. A power supply system according to claim 15, **characterized in that**
said power factor improvement circuit (Pf) rectifies said outputs from a plurality of AC power supplies (AcS1, AcS2) having a different frequency and a different phase through respective rectifying elements (Re1, Re2);
a plurality of outputs of said plurality of AC power supplies (AcS1, AcS2) are connected through said respective inductances (Le1, Le2);
by changing a duty ratio between a first switching element (Mo1) and a second switching element (Mo2) of a double forward type DC/DC converter (Con1) which switches at the higher frequency than that of said AC power supplies (AcS1, AcS2), the power factor of said respective AC power supplies (AcS1, AcS2) is improved in said power factor improvement circuit (Pf).

18. A power supply system for use in an electric car according to claim 1,
the power supply system comprising:
a plurality of motors (Mt1, Mt2) for driving the electric car;
a plurality of inverters (Inv1 - Invk); and
a plurality of battery power supplies (Bt1, Bt2);
**characterized in that**
said plurality of motors (Mt1, Mt2) and a plurality of inverters (Inv1 -Invk) are connected through a plurality of common buses (Bus31, Bu32); and
said plurality of inverters (Inv1 - Invk) and a plurality of power supplies (AcS1, AcS2) are connected through at least one common bus (Bu1, Bu2),
the electric power is given and supplied.

19. A power supply system for use in a computer system having a plurality of computers according to claim 1, the power supply system comprising:
a plurality of converters (Con1, Con2) for supplying electric power to said plurality of computers;
a plurality of rectifying units (Re1, Re2); and
a plurality of AC power supplies (AcS1, AcS2);
**characterized in that**
said plurality of computers and said plurality of converters (Con1, Con2) are connected through plural common buses (Bu31, Bu32); and
said plurality of converters (Con1, Con2) and said plurality of rectifying units (Re1, Re2) are connected through at least one common bus (Bu21),
the electric power is given and supplied.

## Patentansprüche

1. Stromversorgungssystem, umfassend:
eine Vielzahl von elektrischen Leistungswandlern (Con1 - Con4), jeder zum Wandeln eines Eingangsstroms in einen Gleichstrom, welcher eine vorherbestimmte Spannung hat, wobei Ausgänge der Konverter (Con1 - Con4) parallel verbunden sind, um eine Last (Lo) mit elektrischer Leistung zu versorgen;
ein Stromerkennungsmittel (Cs) zum Erkennen einer Größe von Ausgangsstrom (Cs1) von jedem der Vielzahl von Wandlern (Con1 - Con4),
ein Maximalstromerkennungsmittel ((CCs1, OP2, D3', CL) von CC1) zum Erkennen eines maximalen Ausgangsstromwerts unter den Ausgangsstromwerten (Cs1) der Wandler (Con1 - Con4), welche durch die Stromerkennungsmittel (Cs) erkannt wurden;
ein Steuermittel ((OP1, Rf, Vs1, PWM) von CC1) zum Steuern der Ausgangsstromwerte und der Ausgangsspannungswerte der Vielzahl von Wandlern (Con1 - Con4), umfassend:
- ein Bestimmungsmittel ((CCs1, OP2, D3', CL) von CC1) zum Vergleichen des erkannten maximalen Ausgangsstromwerts mit den erkannten Ausgangsstromwerten jeder der Wandler (Con1 - Con4),
- Mittel ((OP1, Rf, Vsl, PWM) von CC1) zum Steuern jeder der Ausgangsstromwerte der Wandler (Con1 - Con4), so dass sie in Übereinstimmung sind mit dem erkannten maximalen Ausgangsstromwert der Wandler (Con1 - Con4), und so dass sogar in dem Fall, dass einer von der Vielzahl von Wandlern (Con1 - Con4) defekt ist und sein Ausgangsstromwert null ist, die Ausgangsstromwerte der verbleibenden Wandler gleich sind wie der erkannte maximale Ausgangsstromwert;
**dadurch gekennzeichnet, dass**
jeder der Wandler (Con1 - Con4) mit einer Diode (DP1) versehen ist zum Verhindern eines umgekehrten Stromflusses;
die Anzahl von Wandlern (Con1 - Conk), wenn eine zulässige Ausfallsanzahl der Wandler (Con1 - Conk) durch h ausgedrückt wird, und die Anzahl der Vielzahl von Wandlern (Con1 - Conk), die parallel verbunden sind, durch k ausgedrückt wird, so gewählt ist, um die Beziehung (2 + 2h) ≤ k ≤ (8 + 2h) zu erfüllen.

2. Stromversorgungssystem gemäß Anspruch 1, **dadurch gekennzeichnet, dass** jeder der Wandler (Con1 - Con4) umfasst
einen Transformator (TR) zum Wandeln von Wechselstrom oder Gleichstrom in Gleichstrom einer vorherbestimmten Spannung; und wobei das Stromversorgungssystem umfasst:
ein Stromwerterkennungsmittel (Idc) zum Erkennen eines Stromwertes, welcher in der Sekundärwicklung des Transformators (TR) fließt; eine jeweilige Stromwerterkennungsschaltung (Cvj) zum Erkennen eines DC-Ausgangsstromwertes der jeweiligen Wandler (Con1 - Con4);
eine Maximalstromwerterkennungsschaltung (Cvm) zum Vergleichen von Stromwerten von den jeweiligen Stromerkennungsmitteln (Cvj) der jeweiligen Wandler (Con1 - Con4) zum Erkennen eines maximalen Stromwertes unter den verglichenen Stromwerten; und
ein Additionsmittel zum Addieren einer Differenz zwischen dem maximalen Stromwert der jeweiligen Wandler (Con1 - Con4) und dem Ausgangsstromwert des jeweiligen Wandlers (Con1 - Con4) zu dem Spannungswertsteuermittel ((Vsl, Rf, PWM) von CC1).

3. Stromversorgungssystem gemäß Anspruch 1, **dadurch gekennzeichnet, dass** es weiterhin umfasst:
ein AC-Netzteil (AcS), verbunden an einen ersten gemeinsamen Bus (Bu1);
eine Vielzahl von Gleichrichtermitteln (Re1 - Re3) zum Wandeln eines Wechselstroms von dem ersten gemeinsamen Bus (Bu1) in einen Gleichstrom;
einen zweiten gemeinsamen Bus (Bu2), verbunden mit Gleichstromausgängen der Vielzahl von Gleichrichtermitteln (Re1 - Re3), eine Vielzahl von DC/DC-Wandlern (Con1 -Conk), gekoppelt, um einen DC-Eingang von dem zweiten gemeinsamen Bus (Bu2) zu empfangen zum Wandeln des Wechselstroms in einen Gleichstrom, der eine vorherbestimmte Spannung hat, und
einen dritten gemeinsamen Bus (Bu3), verbunden mit DC-Ausgängen der DC/DC-Wandler (Con1 -Conk), welche durch den dritten gemeinsamen Bus (Bu3) einer Vielzahl von Lasten (Lo1 - Lom) bereitgestellt werden.

4. Stromversorgungssystem, welches eine Vielzahl von Wandlern (PS1 - PSk) zum Bereitstellen von Gleichstrom elektrischer Leistung an eine Vielzahl von Lasten (DU11 - DU1m; ...; DUn1 - DUnm) hat, gemäß Anspruch 1, **dadurch gekennzeichnet, dass**:
die Vielzahl von Lasten (DU11 - DU1m; ...; DUn1 - DUnm) in mehrere Gruppen (DU11 - DU1m; ...; DUn1 - DUnm) unterteilt sind;
ein erster gemeinsamer Bus (BU11, BU12, ..., BU1g) elektrische Leistung an eine erste Gruppe (DU11 - DU1m) der Vielzahl von Lasten (DU11 - DU1m; ...; DUn1 - DUnm) bereitstellt;
ein erster Cluster beinhaltet ist von dem ersten gemeinsamen Bus (BU11, BU12, ..., BU1g);
ein zweiter Cluster verbunden an den ersten Cluster in Vielzahl sind;
ein zweiter gemeinsamer Bus (BU21, BU22, ..., BU2g) elektrische Leistung an den zweiten Cluster gemeinschaftlich bereitstellt;
die Vielzahl von Wandlern (PS1 - PSk) verbunden sind mit dem zweiten gemeinsamen Bus (BU21, BU22, ..., BU2g); und
durch die ersten und zweiten gemeinsamen Busse (BU11, BU12, ..., BU1g; BU21, BU22, ..., BU2g) elektrische Leistung gegeben und bereitgestellt wird.

5. Stromversorgungssystem gemäß Anspruch 4, **dadurch gekennzeichnet, dass** das Stromversorgungssystem umfasst:
einen dritten Cluster zum Bereitstellen von elektrischer Leistung an den zweiten gemeinsamen Bus (BU21, BU22, ..., BU2g) und den zweiten Cluster;
durch Bereitstellen von gemeinsamen Bussen, welche als x-Grad (wobei x eine ganze Zahl ist) klassifiziert sind, die Vielzahl von Wandlern (PS1 - PSk) an den gemeinsamen Bus mit dem höchsten klassifizierten Grad verbunden sind; und die elektrische Leistung wird gegeben und bereitgestellt.

6. Stromversorgungssystem gemäß Anspruch 4, **dadurch gekennzeichnet, dass** das Stromversorgungssystem umfasst:
eine einzige Masseseite (BU11, BU12, ..., BU1g) von jedem des ersten gemeinsamen Busses (BU11, BU12, ..., BU1g) und des zweiten gemeinsamen Busses (BU21, BU22, ..., BU2g) ;
mehrere Antimasseseiten (BU21, BU22, ..., BU2g) von jedem des ersten gemeinsamen Busses (BU11, BU12, ..., BU1g) und des zweiten gemeinsamen Busses (BU21, BU22, ..., BU2g) sind parallel verbunden; und
durch die mehreren klassifizierten gemeinsamen Busse wird die elektrische Leistung gegeben und bereitgestellt.

7. Stromversorgungssystem gemäß Anspruch 4, **dadurch gekennzeichnet, dass** das Stromversorgungssystem umfasst:
eine Sicherung (F111 - F112; ...; Fn11 - Fn12; F01, F02), bereitgestellt an einer Anti-Masseseite von jedem des ersten gemeinsamen Busses (BU11, BU12, ..., BU1g) und des zweiten gemeinsamen Busses (BU21, BU22m ..., BU2g); und
eine Kapazität der Sicherung (F111 - F112; ...; Fn11 - Fn12) des ersten gemeinsamen Busses (BU11, BU12, ..., BU1g) kleiner ist als eine Kapazität der Sicherung (F01, F02) des zweiten gemeinsamen Busses (BU21, BU22, ..., BU2g).

8. Stromversorgungssystem gemäß Anspruch 4, **dadurch gekennzeichnet, dass** das Stromversorgungssystem umfasst:
einen Schalter (SW11, SW12, ..., SWn1, SWn2; SW1, SW2) zum Unterbrechen einer Versorgung der elektrischen Leistung auf einer Anti-Masseseite des ersten gemeinsamen Busses (BU11, BU12, ..., BU1g) und des zweiten gemeinsamen Busses (BU21, BU22, ..., BU2g).

9. Stromversorgungssystem gemäß Anspruch 4, **dadurch gekennzeichnet, dass** das Stromversorgungssystem umfasst:
einen Kondensator (C01, C02), verbunden zwischen einer Masseseite und einer Anti-Masseseite von jedem des ersten gemeinsamen Busses (BU11, BU12, ..., BU1g) und des zweiten gemeinsamen Busses (BU21, BU22, ..., BU1g) und des zweiten gemeinsamen Busses (BU21, BU22, ..., BU2g).

10. Stromversorgungssystem gemäß Anspruch 4, **dadurch gekennzeichnet, dass** das Stromversorgungssystem umfasst:
eine Diode (D111 - D112, ..., Dlnl - D1n2), welche den ersten gemeinsamen Bus (BU11, BU12, ..., BU1g) und einen Magnetplattenapparat (DU11 - DU1m, ..., DUn1 - DUnm) verbindet.

11. Stromversorgungssystem gemäß Anspruch 4, **dadurch gekennzeichnet, dass** das Stromversorgungssystem umfasst:
eine Anzahl von 8 x x (x: ganze Zahl) von Magnetplattenapparaten (DU11 - DU1m, ..., DUn1 - DUnm), welche an den ersten gemeinsamen Bus (BU11, BU12, ..., BU1g) verbunden sind, welcher die elektrische Leistung bereitstellt.

12. Stromversorgungssystem gemäß Anspruch 4, **dadurch gekennzeichnet, dass**
eine Anzahl von 8 x x (x: ganze Zahl) erster Cluster angeordnet sind.

13. Stromversorgungssystem gemäß Anspruch 4, **dadurch gekennzeichnet, dass**
unter Bezug auf eine Bitrichtung von Daten, welche auf einem Magnetplattenapparat aufgezeichnet werden, ein erstes Bit auf einem ersten Cluster aufgezeichnet wird, ein zweites Bit auf einem zweiten Cluster aufgezeichnet wird und ein n-tes Bit auf einem n-ten Cluster aufgezeichnet wird.

14. Stromversorgungssystem gemäß Anspruch 1, wobei das Stromversorgungssystem umfasst:
eine Lastgruppe (Lo1 - Lom), welche eine Vielzahl von Lasten (Lo1 - Lom) hat;
eine Wandlergruppe (Con1 - Con4), welche eine Vielzahl von DC/DC-Wandlem (Con1 - Con4) hat;
eine Vielzahl von Gleichrichtereinheiten (Re1 - Re3);
eine Vielzahl von AC-Netzteilen (AcS1, AcS2); und welche durch wenigstens einen gemeinsamen Bus (BU11, BU12, ..., BU1g; BU21, BU22, ..., BU2g) verbunden sind zwischen der Lastgruppe (Lo1 - Lom) und der Wandlergruppe (Con1 - Con4) und den Gleichrichtereinheiten (Re1 - Re3) und der Vielzahl von AC-Netzteilen (AcS1, AcS2),
wobei die elektrische Leistung an die Vielzahl von Lasten (Lo1 - Lom) bereitgestellt wird.

15. Stromversorgungssystem gemäß Anspruch 1, wobei das Stromversorgungssystem umfasst:
eine einzige Leistungsfaktor-Verbesserungsschaltung (Pf), gekoppelt an Gleichrichterausgänge von einer Vielzahl von AC-Netzteilen (AcS1, AcS2) durch jeweilige Gleichrichterelemente (Re1, Re2);
mit Bezug auf jeden der Gleichrichterausgänge wird durch jeweilige Induktanzen (Le1, Le2) in der einzigen Leistungsfaktor-Verbesserungsschaltung (Pf) ein Leistungsfaktor von jedem der AC-Netzteile (AcS1, AcS2) verbessert durch eine Schaltoperation mit einer höheren Frequenz als diejenige der AC-Netzteile (AcS1, AcS2) durch ein Schaltelement (Mo3); und
die gleichgerichteten Ausgänge werden einer Vielzahl von Wandlern (Con1, Con2) bereitgestellt als die elektrische Leistung durch einen gemeinsamen Bus (Bu2, Bu2g).

16. Stromversorgungssystem gemäß Anspruch 15, **dadurch gekennzeichnet, dass**
durch Steuern einer relativen Einschaltdauer des Schaltelements (Mo3) eine Klemmspannung eines Glättkondensators (C2), welcher an einer Ausgangsseite der Leistungsfaktor-Verbesserungsschaltung (Pf) bereitgestellt ist, im Wesentlichen konstant gehalten wird.

17. Stromversorgungssystem gemäß Anspruch 15, **dadurch gekennzeichnet, dass**
die Leistungsfaktor-Verbesserungsschaltung (Pf) die Ausgänge von einer Vielzahl von AC-Netzteilen (AcS1, AcS2) gleichrichtet, welche eine unterschiedliche Frequenz und eine unterschiedliche Phase haben, durch jeweilige Gleichrichterelemente (Re1, Re2);
eine Vielzahl von Ausgängen der Vielzahl von AC-Netzteilen (AcS1, AcS2) verbunden sind durch die jeweiligen Induktanzen (Le1, Le2);
durch Verändern einer relativen Einschaltdauer zwischen einem ersten Schaltelement (Mo1) und einem zweiten Schaltelement (Mo2) eines doppelten Vorwärtstyps DC/DC-Wandlers (Con1), der zu der höheren Frequenz schaltet als die des AC-Netzteils (AcS1, AcS2), der Leistungsfaktor des jeweiligen AC-Netzteils (AcS1, AcS2) in der Leistungsfaktor-Verbesserungsschaltung (Pf) verbessert wird.

18. Stromversorgungssystem zur Verwendung in einem elektrischen Automobil gemäß Anspruch 1,
wobei das Stromversorgungssystem umfasst:
eine Vielzahl von Motoren (Mt1, Mt2) zum Antreiben des elektrischen Automobils;
eine Vielzahl von Invertem (Inv1 - Invk); und
eine Vielzahl von Batterieleistungsversorgungen (Bt1, Bt2);
**dadurch gekennzeichnet, dass**
die Vielzahl von Motoren (Mt1, Mt2) und eine Vielzahl von Invertern (Inv1 - Invk) durch eine Vielzahl von gemeinsamen Bussen (Bu31, Bu32) verbunden sind; und
die Vielzahl von Invertern (Inv1 - Invk) und eine Vielzahl von Stromversorgungen (AcS1, AcS2) durch wenigstens einen gemeinsamen Bus (Bu1, Bu2) verbunden sind,
die elektrische Leistung gegeben und bereitgestellt wird.

19. Stromversorgungssystem zur Verwendung in einem Computersystem, welches eine Vielzahl von Computern hat, gemäß Anspruch 1, wobei das Stromversorgungssystem umfasst:
eine Vielzahl von Wandlern (Con1, Con2) zum Bereitstellen elektrischer Leistung an die Vielzahl von Computern;
eine Vielzahl von Gleichrichtereinheiten (Re1, Re2); und
eine Vielzahl von AC-Netzteilen (AcS1, AcS2);
**dadurch gekennzeichnet, dass**
die Vielzahl von Computern und die Vielzahl von Wandlern (Con1, Con2) durch mehrere gemeinsame Busse (Bu31, Bu32) verbunden sind; und
die Vielzahl von Wandlern (Con1, Con2) und die Vielzahl von Gleichrichtereinheiten (Re1, Re2) durch wenigstens einen gemeinsamen Bus (Bu21) verbunden sind,
die elektrische Last gegeben und bereitgestellt wird.

## Revendications

1. Système d'alimentation en énergie, comportant :
une pluralité de convertisseurs d'énergie électrique (Con1 à Con4), chacun destiné à convertir un courant d'entrée en un courant continu ayant une tension prédéterminée, les sorties desdits convertisseurs (Con1 à Con4) étant connectées en parallèle pour alimenter en énergie électrique une charge (Lo),
des moyens de détection de courant (Cs) pour détecter une grandeur d'un courant de sortie (Cs1) de chacun de ladite pluralité de convertisseurs (Con1 à Con4),
des moyens de détection de courant maximal ((CCs1, OP2, D3', CL) de CC1) pour détecter une valeur de courant de sortie maximale parmi les valeurs de courant de sortie (Cs1) desdits convertisseurs (Con1 à Con4) détectées par lesdits moyens de détection de courant (Cs),
des moyens de commande ((OP1, Rf, Vs1, PWM) de CC1) pour commander les valeurs de courant de sortie et les valeurs de tension de sortie de ladite pluralité de convertisseurs (Con1 à Con4), comportant :
- des moyens de détermination ((CCs1, OP2, D3', CL) de CC1) pour comparer ladite valeur de courant de sortie maximale détectée aux-dites valeurs de courant de sortie détectées de chacun desdits convertisseurs (Con1 à Con4),
- des moyens ((OP1, Rf, Vsl, PWM) de CC1) pour commander chacune desdites valeurs de courant de sortie desdits convertisseurs (Con1 à Con4) de sorte qu'elles correspondent à ladite valeur de courant de sortie maximale détectée desdits convertisseurs (Con1 à Con4) et de sorte que même dans le cas où l'un de la pluralité de convertisseurs (Con1 à Con4) est défectueux et sa valeur de courant de sortie est égale à zéro, les valeurs de courant de sortie des convertisseurs restants sont identiques à ladite valeur de courant de sortie maximale détectée,
**caractérisé en ce que** :
chacun desdits convertisseurs (Con1 à Con4) est muni d'une diode (DP1) pour empêcher une circulation inverse de courant,
le nombre des convertisseurs (Con1 à Conk), lorsqu'un nombre de défaillances admissibles dudit convertisseur (Con1 à Conk) est exprimé par h, et le nombre de ladite pluralité de convertisseurs (Con1 à Conk) connectés en parallèle est exprimé par k, est sélectionné de manière à satisfaire à une relation (2+2h)≤k≤(8+2h).

2. Système d'alimentation en énergie selon la revendication 1, **caractérisé en ce que** chacun desdits convertisseurs (Con1 à Con4) comporte :
un transformateur (TR) pour convertir un courant alternatif ou continu en courant continu ayant une tension prédéterminée, et
le système d'alimentation en énergie comportant :
des moyens de détection de valeur de courant (Idc) pour détecter une valeur de courant circulant dans une bobine secondaire dudit transformateur (TR),
un circuit de détection de valeur de courant respectif (Cvj) pour détecter une valeur de courant continu (DC) de sortie dudit convertisseur respectif (Con1 à Con4),
un circuit de détection de valeur de courant maximale (Cvm) pour comparer des valeurs de courant provenant desdits moyens de détection de valeur de courant respectifs (Cvj) desdits convertisseurs (Con1 à Con4) respectifs pour détecter une valeur de courant maximale parmi lesdites valeurs de courant comparées, et
des moyens d'addition pour ajouter une différence entre ladite valeur de courant maximale dudit convertisseur respectif (Con1 à Con4) et ladite valeur de courant de sortie dudit convertisseur respectif (Con1 à Con4) auxdits moyens de commande de valeur de tension ((Vs1, Rf, PWM) de CC1).

3. Système d'alimentation en énergie selon la revendication 1, **caractérisé en ce qu'**il comporte en outre :
une alimentation en énergie à courant alternatif (AcS) connectée à un premier bus commun (Bu1),
une pluralité de moyens de redressement (Re1 à Re3) pour convertir un courant alternatif provenant dudit premier bus commun (Bu1) en un courant continu,
un deuxième bus commun (Bu2) connecté à des sorties de courant continu de ladite pluralité de moyens de redressement (Re1 à Re3), une pluralité de convertisseurs courant continu / courant continu (Con1 à Conk) couplés pour recevoir une entrée de courant continu provenant dudit deuxième bus commun (Bu2) pour convertir le courant alternatif en un courant continu ayant une tension prédéterminée, et
un troisième bus commun (Bu3) connecté à des sorties courant continu des convertisseurs courant continu / courant continu (Con1 à Conk) étant amené à une pluralité de charges (Lo1 à Lom) via ledit troisième bus commun (Bu3).

4. Système d'alimentation en énergie ayant une pluralité de convertisseurs (PS1 à PSk) pour délivrer une énergie électrique de courant direct à une pluralité de charges (DU11 à DU1m ; ... ; DUn1 à DUnm), selon la revendication 1, **caractérisé en ce que** :
ladite pluralité de charges (DU11 à DU1m ; ... ; DUn1 à DUnm) sont divisées en plusieurs groupes (DU11 à DU1m ; ... ; DUn1 à DUnm),
un premier bus commun (BU11, BU12, ..., BU1g) délivre une énergie électrique à un premier groupe (DU11 à DU1m) de ladite pluralité de charges (DU11 à DU1m ; ... ; DUn1 à DUnm),
une première grappe est constituée dudit premier bus commun (BU11, BU12 , ..., BU1g),
une deuxième grappe est connectée à ladite première grappe,
un deuxième bus commun (BU21, BU22, ..., BU2g) délivre d'une manière commune une énergie électrique à ladite seconde grappe,
ladite pluralité de convertisseurs (PS1 à PSk) sont connectés audit deuxième bus commun (BU21, BU22, ..., BU2g), et
à travers lesdits premier et deuxième bus communs ((BU11, BU12, ..., BU1g ; BU21, BU22, ..., BU2g) , une énergie électrique est donnée et délivrée.

5. Système d'alimentation en énergie selon la revendication 4, **caractérisé en ce que** le système d'alimentation en énergie comporte :
une troisième grappe pour délivrer une énergie électrique audit deuxième bus commun (BU21, BU22, ..., BU2g) et à ladite deuxième grappe,
en fournissant à des bus communs classés à un degré x (x étant un nombre entier), ladite pluralité de convertisseurs (PS1 à PSk) sont connectés au bus commun ayant la plus haute classe, et l'énergie électrique est donnée et délivrée.

6. Système d'alimentation en énergie selon la revendication 4, **caractérisé en ce que** le système d'alimentation en énergie comporte :
un côté masse unique (BU11, BU12, ..., BU1g) de chacun dudit premier bus commun (BU11, BU12, ..., BU1g) et dudit deuxième bus commun (BU21, BU22, ..., BU2g),
plusieurs côtés anti-masse (BU21, BU22, ..., BU2g) de chacun dudit premier bus commun (BU11, BU12, ... , BU1g) et dudit deuxième bus commun (BU21, BU22, ..., BU2g) sont connectés en parallèle, et
via lesdits plusieurs bus communs classés, l'énergie électrique est donnée et délivrée.

7. Système d'alimentation en énergie selon la revendication 4, **caractérisé en ce que** le système d'alimentation en énergie comporte :
un fusible (F111 à F112 ; ... ; Fn11 à Fn12 ; F01, F02) fourni sur un côté anti-masse de chacun dudit premier bus commun (BU11, BU12, ..., BU1g) et dudit deuxième bus commun (BU21, BU22, ..., BU2g), et
une capacité dudit fusible (F111 à F112 ; ... ; Fn11 à Fn12) dudit premier bus commun (BU11, BU12, ..., BU1g) est plus petite qu'une capacité dudit fusible (F01, F02) dudit deuxième bus commun (BU21, BU22, ..., BU2g).

8. Système d'alimentation en énergie selon la revendication 4, **caractérisé en ce que** le système d'alimentation en énergie comporte :
un commutateur (SW11, SW12, ..., SWn1, SWn2 ; SW1, SW2) pour interrompre l'alimentation en énergie électrique d'un côté anti-masse dudit premier bus commun (BU11, BU12, ..., BU1g)) et dudit deuxième bus commun (BU21, BU22, ..., BU2g).

9. Système d'alimentation en énergie selon la revendication 4, **caractérisé en ce que** le système d'alimentation en énergie comporte :
un condensateur (C01, C02) connecté entre un côté masse et un côté anti-masse de chacun dudit premier bus commun (BU11, BU12, ..., BU1g) et dudit deuxième bus commun (BU21, BU22, ..., BU2g) et dudit deuxième bus commun (BU21, BU22, ..., BU2g).

10. Système d'alimentation en énergie selon la revendication 4, **caractérisé en ce que** le système d'alimentation en énergie comporte :
une diode (D111 à D112, ..., D1n1 à D1n2) connectant ledit premier bus commun (BU11, BU12, ..., BU1g) et un dispositif à disque magnétique (DU11 à DU1m, ..., DUn1 à DUnm).

11. Système d'alimentation en énergie selon la revendication 4, **caractérisé en ce que** le système d'alimentation en énergie comporte :
un nombre égal à 8×x dispositifs à disque magnétique (x : un nombre entier) (DU11 à DU1m, ..., DUn1 à DUnm) connectés audit premier bus commun (BU11, BU12, ..., BU1g), en délivrant l'énergie électrique.

12. Système d'alimentation en énergie selon la revendication 4, **caractérisé en ce que** :
un nombre égal à 8×x (x : un nombre entier) premières grappes sont agencées.

13. Système d'alimentation en énergie selon la revendication 4, **caractérisé en ce que** :
en ce qui concerne une direction binaire de données enregistrées sur un dispositif à disque magnétique, un premier bit est enregistré sur une première grappe, un deuxième bit est enregistré sur une deuxième grappe, et un bit n° n est enregistré sur une grappe n° n.

14. Système d'alimentation en énergie selon la revendication 1, le système d'alimentation en énergie comportant :
un groupe de charges (Lo1 à Lom) ayant une pluralité de charges (Lo1 à Lom),
un groupe de convertisseurs (Con1 à Con4) ayant une pluralité de convertisseurs courant continu / courant continu (Con1 à Con4),
une pluralité d'unités redresseuses (Re1 à Re3),
une pluralité d'alimentations en énergie à courant alternatif (AcS1, AcS2), et à travers au moins un bus commun (BU11, BU12, ..., BU1g ; BU21, BU22, ..., BU2g) connecté entre ledit groupe de charges (Lo1 à Lom) et ledit groupe de convertisseurs (Con1 à Con4) et lesdites unités redresseuses (Re1 à Re3) et ladite pluralité d'alimentations en énergie à courant alternatif (AcS1, AcS2),
ainsi l'énergie électrique est délivrée à ladite pluralité de charges (Lo1 à Lom).

15. Système d'alimentation en énergie selon la revendication 1, le système d'alimentation en énergie comportant :
un circuit d'amélioration de facteur de puissance unique (Pf) couplé pour redresser des sorties provenant d'une pluralité d'alimentations en énergie à courant alternatif (AcS1, AcS2) via des éléments redresseurs respectifs (Re1, Re2),
en ce qui concerne chacune desdites sorties redresseuses, à travers des inductances respectives (Le1, Le2), dans ledit circuit d'amélioration de facteur de puissance unique (Pf), un facteur de puissance de chacune desdites alimentations en énergie à courant alternatif (AcS1, AcS2) est amélioré par une opération de commutation à une fréquence supérieure à celle de ladite alimentation en énergie à courant alternatif (AcS1, AcS2) via un élément de commutation (Mo3), et
lesdites sorties redressées sont délivrées à une pluralité de convertisseurs (Con1, Con2) en tant qu'énergie électrique via un bus commun (Bu2, Bu2g).

16. Système d'alimentation en énergie selon la revendication 15, **caractérisé en ce que** :
en commandant un cycle nominal dudit élément de commutation (Mo3), une tension aux bornes d'un condensateur de lissage (C2), qui est fourni d'un côté sortie dudit circuit d'amélioration de facteur de puissance (Pf), est maintenue sensiblement constante.

17. Système d'alimentation en énergie selon la revendication 15, **caractérisé en ce que** :
ledit circuit d'amélioration de facteur de puissance (Pf) redresse lesdites sorties provenant d'une pluralité d'alimentations en énergie à courant alternatif (AcS1, AcS2) ayant une fréquence différente et une phase différente via des éléments redresseurs respectifs (Re1, Re2),
une pluralité de sorties de ladite pluralité d'alimentations en énergie à courant alternatif (AcS1, AcS2) sont connectées via lesdites inductances respectives (Le1, Le2),
en changeant un cycle nominal entre un premier élément de commutation (Mo1) et un second élément de commutation (Mo2) d'un convertisseur courant continu / courant continu de type direct double (Con1) qui commute à la fréquence supérieure à celle desdites alimentations en énergie à courant alternatif (AcS1, AcS2), le facteur de puissance desdites alimentations en énergie à courant alternatif respectives (AcS1, AcS2) est amélioré dans ledit circuit d'amélioration de facteur de puissance (Pf).

18. Système d'alimentation en énergie destiné à être utilisé dans une voiture électrique selon la revendication 1,
le système d'alimentation en énergie comportant :
une pluralité de moteurs (Mt1, Mt2) pour commander la voiture électrique,
une pluralité d'onduleurs (Inv1 à Invk), et
une pluralité d'alimentations en énergie par batterie (Bt1, Bt2),
**caractérisé en ce que** :
ladite pluralité de moteurs (Mt1, Mt2) et une pluralité d'onduleurs (Inv1 à Invk) sont connectés via une pluralité de bus communs (Bu31, Bu32), et
ladite pluralité d'onduleurs (Inv1 à Invk) et une pluralité d'alimentations en énergie (AcS1, AcS2) sont connectés via au moins un bus commun (Bu1, Bu2),
l'énergie électrique est donnée et délivrée.
19. Système d'alimentation en énergie destiné à être utilisé dans un système informatique ayant une pluralité d'ordinateurs selon la revendication 1, le système d'alimentation en énergie comportant :
une pluralité de convertisseurs (Con1, Con2) pour délivrer une énergie électrique à ladite pluralité d'ordinateurs,
une pluralité d'unités redresseuses (Re1, Re2), et
une pluralité d'alimentations en énergie à courant alternatif (AcS1, AcS2),
**caractérisé en ce que** :
ladite pluralité d'ordinateurs et ladite pluralité de convertisseurs (Con1, Con2) sont connectés via une pluralité de bus communs (Bu31, Bu32), et
ladite pluralité de convertisseurs (Con1, Con2) et ladite pluralité d'unités redresseuses (Re1, Re2) sont connectés via au moins un bus commun (Bu21),
l'énergie électrique est donnée et délivrée.
